# EUROPÄISCHE PATENTSCHRIFT

(11) **EP 3 911 141 B1**
(45) Veröffentlichungstag und Bekanntmachung des Hinweises auf die Patenterteilung: **07.06.2023**
(21) Anmeldenummer: 19711801.1
(22) Anmeldetag: 05.03.2019
(51) Int. Cl.: A01D 45/16, A24B 5/06

(54) **VERFAHREN UND VORRICHTUNG ZUM ABSTREIFEN VON BLÄTTERN UND/ODER BLÜTEN VON EINEM STÄNGEL**
METHOD AND DEVICE FOR STRIPPING LEAVES AND OR FLOWERS FROM A STALK
PROCÉDÉ ET DISPOSITIF POUR ARRACHER LES FEUILLES ET/OU LES FLEURS D'UNE TIGE

(43) Veröffentlichungstag der Anmeldung: 24.11.2021
(73) Patentinhaber: SCHENNACH, Philipp, 8162 Steinmaur (CH)
(72) Erfinder: PITTINI, Raniero, 2502 Biel (CH); MEIER, Sandra, 4710 Balsthal (CH); SCHNELL, Pascal André, 4252 Bärschwil (CH); MEYER, Guido, 3380 Wangen a.A. (CH); SCHENNACH, Philipp, 8162 Steinmaur (CH)
(74) Vertreter: E. Blum & Co. AG
(86) Internationale Anmeldenummer: PCT/CH2019/000007
(87) Internationale Veröffentlichungsnummer: WO 2020/177002

(56) Entgegenhaltungen:
- JP-B2- 3 012 509
- US-A- 449 137
- US-A- 4 509 536
- US-A- 5 044 115

## Beschreibung

### Technisches Gebiet

Die vorliegende Erfindung betrifft ein Verfahren zum Abstreifen von Blättern und/oder Blüten von einem Stängel, eine Abstreifvorrichtung zur Verwendung bei der Durchführung des Verfahrens, eine Anordnung zur Durchführung des Verfahrens umfassend eine solche Abstreifvorrichtung sowie die Verwendung der Abstreifvorrichtung oder der Anordnung zum Abstreifen von Blättern und/oder Blüten von einem Stängel gemäss den Oberbegriffen der unabhängigen Patentansprüche.

### Stand der Technik

Aus dem Stand der Technik sind rechenartige Erntegeräte bekannt, mit denen Früchte oder Blätter geerntet werden. Dabei wird der Stängel oder Ast, welcher die Früchte oder Blätter trägt, zwischen zwei zinkenartigen Elementen des Erntegerätes angeordnet und das Gerät sodann entlang dem Stängel oder Ast geführt, so dass die Früchte oder Blätter von den zinkenartigen Elementen vom Stängel bzw. Ast abgestreift werden. Derartige Geräte sind z.B. aus US 5,177,941 A, US 1,480,825 A oder US 1,484,241 A bekannt. Ebenfalls bekannt ist es, einzelne Stängel durch eine Abstreif-Öffnung in einem Abstreifkörper einer Abstreifvorrichtung hindurchzuziehen, und so Blätter, Blüten und/oder Früchte mit den Begrenzungen der Abstreif-Öffnung vom Stängel abzustreifen. Derartige Vorrichtungen sind z.B. aus WO 2018/014135 A1, WO 20181-048503 A1 oder JP 3012509 B2 bekannt.

All diese bekannten Erntegeräte und Abstreifvorrichtungen weisen jedoch den Nachteil auf, dass es zumindest bei der Ernte von Blättern und Blüten zu einem Zerreissen bzw. Abreissen derselben vom Stängel kommt, mit dem Ergebnis, dass im Wesentlichen stark beschädigte Blätter bzw. Blüten geerntet werden und ein substantieller Teil der verwertbaren Ernte am Stängel verbleibt und verloren ist. Bei den Abstreifvorrichtungen mit Abstreif-öffnungen kommt als weiterer Nachteil hinzu, dass das Einführen der Stängel in die Abstreif-Öffnung relativ viel Geschicklichkeit erfordert und bei Vorhandensein mehrerer unterschiedlich grosser Abstreif-Öffnungen zudem noch eine Selektion nach Stängelstärke erforderlich ist.

Aus US 449 137 A ist eine Abstreifvorrichtung für Blätter von Zuckerrohr bekannt, bei welcher mit federnden Drahtspangen eine Umschliessung um den Schaft des Zuckerrohres gebildet wird und die Blätter durch Hindurchziehen des Zuckerrohres durch diese Umschliessung abgestreift werden. Zum Einführen des Zuckerrohres in die Umschliessung werden die Drahtspangen entgegen ihrer Federkraft zusammengedrückt, wodurch die Umschliessung vergrössert wird. Das Zuckerrohr wird sodann in Abstreifrichtung in die Umschliessung eingeführt und diese anschliessend durch Freigabe der Drahtspangen unter der Federkraft derselben mit bogenförmigen Bereichen an den Schaft des Zuckerrohres angelegt.

US 5 044 115 A offenbart eine gattungsgemässe Abstreifvorrichtung für Blumenstiele, welche aus einer Gummiplatte mit einer Abstreiferöffnung besteht. Von der Abstreiferöffnung erstreckt sich ein Schlitz bis zum Rand der Gummiplatte. Zum Einführen des Blumenstiels wird die Gummiplatte an einer der beiden Seiten, welche den Schlitz begrenzen, elastisch umgebogen, wodurch die Abstreiferöffnung radial geöffnet wird. Der Stiel wird sodann in einer Richtung quer zur Abstreifrichtung in die Abstreiföffnung eingeführt und diese dann durch Zurückführen der umgebogenen Plattenseite in die ursprüngliche Position um den Stiel herum geschlossen.

### Darstellung der Erfindung

Es stellt sich daher die Aufgabe, technische Lösungen zur Verfügung zu stellen, welche die zuvor erwähnten Nachteile des Standes der Technik nicht aufweisen bzw. diese zumindest teilweise vermeiden.

Diese Aufgabe wird durch die Gegenstände der unabhängigen Patentansprüche gelöst.

Gemäss diesen betrifft ein erster Aspekt der Erfindung ein Verfahren zum Abstreifen von Blättern und/- oder Blüten von einem Stängel, bevorzugterweise zum Abstreifen von Cannabisblättern und/oder Cannabisblüten von einem Stängel. Dabei wird erfindungsgemäss eine Umschlingung um den Stängel gebildet, durch welche der Stängel sodann in Stängellängsrichtung hindurchgezogen wird, unter einem Abstreifen der Blätter und/oder Blüten vom Stängel. Die Umschlingung, welche an der Oberfläche des Stängels anliegt, wird vollständig oder zumindest in einem überwiegenden Bereich aus biegeelastischen oder biegeschlaffen und in Umschlingungsrichtung zugfesten Umschlingungsmitteln gebildet, so dass sie sich an die jeweilige Form und Dicke des Stängels anpassen kann, ohne jedoch umfangsmässig nachgiebig zu sein. Geeignete biegeelastische oder biegeschlaffe und in Umschlingungsrichtung zugfeste Umschlingungsmittel sind beispielsweise Schnüre, Seile oder Bänder aus zugfesten Kunststoffen, z.B. aus Polyamid, oder aus Metall, insbesondere aus Edelstahl. Hierdurch wird es möglich, die Blätter bzw. Blüten einfacher und direkt an der Stängeloberfläche abzustreifen, so dass diese besser, schneller und unbeschädigter geerntet werden können.

Erfindungsgemäss wird der Stängel im Wesentlichen quer zur Abstreifrichtung in einen von den Umschlingungsmitteln teilweise begrenzten Bereich eingeführt und dieser Bereich sodann vollständig von den Umschlingungsmitteln und allfälligen weiteren die Umschlingung bildenden Elementen, z.B. ein starres Bauteil, umschlossen und umfangsmässig verkleinert, bis der Stängel von den Umschlingungsmitteln und den allfälligen weiteren Elementen umschlungen ist. Sodann wird der Stängel in Stängellängsrichtung durch die so gebildete Umschlingung hindurchgezogen, unter einem Abstreifen der Blätter und/oder Blüten vom Stängel. Die Einführung des Stängelendes quer zur Stängellängsrichtung bzw. quer zur Abstreifrichtung weist den Vorteil auf, dass sie sehr wenig Geschicklichkeit erfordert und auch maschinell sehr einfach zu bewerkstelligen ist. Auch ist weniger Vorarbeit erforderlich.

Bevorzugterweise wird während dem Hindurchziehen des Stängels durch die Umschlingung eine bestimmte Zugkraft in Umschlingungsrichtung in den Umschlingungsmitteln sichergestellt, so dass sich die Umschlingung an die Form und Dicke des jeweils gerade von ihr umschlungenen Abschnitts des Stängels anpasst und auch bei sich während dem Hindurchziehen des Stängels durch die Umschlingung verändernden Stängelquerschnitten immer an der Oberfläche des Stängels anliegt.

Wird die Umschlingung ausschliesslich aus biegeelastischen oder biegeschlaffen und in Umschlingungsrichtung zugfesten Umschlingungsmitteln gebildet, was bevorzugt ist, so kann über den gesamten Umfang des Stängels ein gleichmässiges Anliegen der Umschlingungsmittel an der Oberfläche des Stängels erreicht werden.

Dabei ist es in einer ersten Variante bevorzugt, dass die Umschlingung von einem durchgehenden Abschnitt eines einzigen Umschlingungsmittels gebildet wird, also als durchgehende geschlossene Schlinge um den Stängeln ausgebildet wird. Derartige Umschlingungen lassen sich besonders einfach realisieren, sollten jedoch bevorzugterweise in der Schlingenmitte an einer Tragstruktur befestigt sein, um sich beim Hindurchziehen des Stängels durch die Umschlingung nicht in Durchzugsrichtung zu neigen.

In einer zweiten Variante ist es bevorzugt, dass die Umschlingung von mehreren separaten Abschnitten der biegeelastischen oder biegeschlaffen und in Umschlingungsrichtung zugfesten Umschlingungsmittel gebildet wird oder mehrere separate solche Abschnitte umfasst, bevorzugterweise von genau zwei separaten solchen Abschnitten gebildet ist oder genau zwei separate solche Abschnitte umfasst, welche von einem einzigen oder von mehreren Umschlingungsmitteln bereitgestellt werden. Die Umschlingung wird also in mehrere Teilumfangsbereiche unterteilt, welche ausschliesslich von separaten Abschnitten von biegeelastischen oder biegeschlaffen und in Umschlingungsrichtung zugfesten Umschlingungsmitteln gebildet sind oder zusätzlich über einen Teilbereich auch noch von anderen Elementen gebildet sein können, z.B. von einem starren Bauteil. Die Abschnitte der biegeelastischen oder biegeschlaffen Umschlingungsmittel können ausserhalb des von ihnen gebildeten Umfangsbereichs der Umschlingung mit ihren beiden Enden, bevorzugterweise in der Nähe des Stängels, an einer Tragstruktur befestigt werden, so dass eine Umschlingung resultiert, die in Durchzugsrichtung des Stängels bzw. in Stängellängsrichtung eine relativ hohe Stabilität aufweist.

Bevorzugterweise wird der Bereich, in den der Stängel im Wesentlichen quer zur Abstreifrichtung eingeführt wird, zwischen zwei, mit Vorteil von einem gemeinsamen Ausgangspunkt, voneinander wegführenden Abschnitten von Umschlingungsmitteln gebildet. Dieser Bereich wird sodann, nach dem Einführen des Stängels, durch Überkreuzen der beiden Abschnitte der Umschlingungsmittel vollständig umschlossen und umfangsmässig verkleinert, bis der Stängel von den Umschlingungsmitteln und den allfälligen weiteren die Umschlingung bildenden Elementen umschlungen ist. Beispielsweise werden zwei direkt aufeinanderfolgende Abschnitte eines Umschlingungsmittels derartig bereitgestellt, dass sie einen U-förmigen oder V-förmigen Bereich bilden, dessen Öffnungsweite um ein Mehrfaches grösser ist als der Durchmesser des Stängels. Sodann wird der Stängel mit einem Ende quer zur Abstreifrichtung bzw. quer zur Stängellängsrichtung in den von den beiden Schenkeln der U- oder V-Form begrenzten Bereich eingeführt, durch Überkreuzen der freien Enden der Schenkel der U- oder V-Form eine Schlinge um das Ende des Stängels gebildet und die Schlinge sodann zugezogen, bis der Stängel vollständig von den Umschlingungsmitteln umschlungen ist.

In einer bevorzugten Variante wird der Bereich, in den der Stängel im Wesentlichen quer zur Abstreifrichtung eingeführt wird, zwischen zwei von einem gemeinsamen Ausgangspunkt voneinander wegführenden Abschnitten von Umschlingungsmitteln gebildet, wobei der gemeinsame Ausgangspunkt von einer Stelle gebildet wird, an der sich diese Abschnitte überkreuzen. Auf diese Weise können diese Abschnitte voneinander getrennt sein, z.B. durch weitere Abschnitte des gleichen Umschlingungsmittels, welche nicht an der Umschlingung beteiligt sind, und sie können auch von separaten Umschlingungsmitteln gebildet werden.

Dabei ist es weiter bevorzugt, dass das Überkreuzen der dem gemeinsamen Ausgangspunkt abgewandten Bereiche der beiden Abschnitte zum Umschliessen des Stängels derartig erfolgt, dass an dieser Überkreuzungsstelle in Abstreifrichtung bzw. in Stängellängsrichtung gesehen eine Abfolge der beiden Abschnitte vorliegt, welche umgekehrt ist zu der Abfolge, welche bei der den gemeinsamen Ausgangspunkt bildenden Überkreuzungstelle vorliegt. Auf diese Weise ergibt sich eine erhöhte Stabilität in Abstreif- bzw. Stängellängsrichtung und zudem der Vorteil, dass etwaige Verschmutzungen der zum Abstreifen verwendeten Abschnitte der Umschlingungsmittel durch die zyklische Relativbewegung derselben zueinander beim Herstellen und Aufheben der Umschlingung abgestreift werden, so dass eine Art Selbstreinigungseffekt resultiert.

Mit Vorteil erfolgt das Überkreuzen der beiden Abschnitte der Umschlingungsmittel zum Umschliessen des Stängels durch ein Verschwenken zweier Schwenkarme, an denen jeweils ein Ende eines der beiden Abschnitte angeordnet ist. Auf diese Weise wird ein einfaches Einführen des Stängelendes begünstigt und es lässt sich eine stabile Führung der Enden der Umschlingungsmittel realisieren.

Dabei können die Abstände zwischen dem Befestigungsort des Endes des jeweiligen Abschnitts zur Schwenkachse des jeweiligen Schwenkarms bei beiden Schwenkarmen gleich gross oder unterschiedlich gross sein. Im letztgenannten Fall ergibt sich, insbesondere wenn der kleinere dieser Abstände weniger als 80% des grösseren dieser Abstände beträgt, der Vorteil, dass sich die an den Schwenkarmen befestigten Enden der beiden Abschnitte beim Überkreuzen nicht treffen, wodurch die Gefahr eines Verhakens deutlich herabgesetzt wird.

Auch ist es dabei bevorzugt, dass das Verschwenken.der Schwenkarme unter einer Überwindung von federelastischen Rückstellkräften erfolgt, welche bei Abwesenheit von Betätigungskräften zum Verschwenken der Schwenkarme eine Rückstellung der Schwenkarme in die Ausgangsstellung (Beschickungsstellung) bewirken, in welcher die zwei Abschnitte der Umschlingungsmittel voneinander wegführen und dabei einen Bereich zwischen sich bilden, in welchen ein Stängel im Wesentlichen quer zur Abstreifrichtung-eingeführt werden kann.

Hierdurch wird es möglich, die Betätigungskräfte zum Verschwenken der Schwenkarme ausschliesslich über die daran angeordneten Enden der Abschnitte der Umschlingungsmittel auf die Schwenkarme zu übertragen, in-, dem eine Zugkraft auf diese Abschnitte der Umschlingungsmittel ausgeübt wird, wenn die Umschlingung hergestellt werden soll, und diese Zugkraft aufgehoben wird, wenn die Umschlingung aufgehoben werden soll bzw. die Ausgangsstellung (Beschickungsstellung) wieder hergestellt werden soll. Diese Betätigungsvariante ist bevorzugt, weil sie einfach zu realisieren ist und sich durch die zyklische Längsbewegung der zum Abstreifen verwendeten Abschnitte der Umschlingungsmittel ein verbesserter Selbstreinigungseffekt ergibt, welche besonders ausgeprägt ist, wenn der Ausgangspunkt der beiden die Umschlingung bildenden Abschnitte - wie zuvor als bevorzugte Ausführungsform beschrieben - von einer Kreuzungsstelle derselben gebildet wird.

Alternativ ist es möglich, die Betätigungskräfte zum Verschwenken der Schwenkarme nicht oder nicht ausschliesslich über die daran angeordneten Enden der Abschnitte der Umschlingungsmittel auf die Schwenkarme zu übertragen, wobei es weiter bevorzugt ist, dass im bestimmungsgemässen Betrieb mit Vorteil kontinuierlich, insbesondere von einem gemeinsamen Ausgangspunkt her, eine konstante oder federelastische Zugkraft auf diese Abschnitte der Umschlingungsmittel ausgeübt wird.

Als Umschlingungsmittel kommen bevorzugterweise Schnüre, Seile oder Bandmaterialien aus Kunststoff, z.B. Polyamid, und/oder Metall, insbesondere aus Edelstahl, zur Anwendung. Derartige Umschlingungsmittel sind kommerziell als Meterware erhältlich und entsprechend kostengüntig.

Dabei ist es von Vorteil, wenn die Schnur, das Seil oder das Bandmaterial fortschreitend oder intervallweise durch neues entsprechendes Material ersetzt wird, also fortschreitend oder intervallweise in seiner Längsrichtung verschoben wird, damit verschlissene und/- oder verschmutzte Abschnitte durch neue ersetzt werden.

Ein zweiter Aspekt der Erfindung betrifft eine Abstreifvorrichtung zur Verwendung bei der Durchführung des Verfahrens gemäss dem ersten Aspekt der Erfindung. Die Vorrichtung umfasst einen Abstreifer zur Bildung einer Umschlingung um einen abzustreifenden Stängel, zum Abstreifen von Blättern und/oder Blüten von dem Stängel bei einem Hindurchziehen des Stängels durch die Umschlingung in Stängellängsrichtung. Der Abstreifer verfügt über biegeelastische oder biegeschlaffe, zugfeste Umschlingungsmittel und ist derartig ausgebildet, dass im bestimmungsgemässen Einsatz die Umschlingung um den Stängel zumindest in einem Teilbereich von diesen Umschlingungsmitteln gebildet wird. Mit einer solchen Abstreifvorrichtung wird es möglich, die Blätter bzw. Blüten einfacher und direkt an der Oberfläche des Stängels abzustreifen, so dass diese im Wesentlichen besser, schneller und unbeschädigter geerntet werden können.

Dabei ist der Abstreifer derartig ausgebildet, dass er in einer Beschickungsstellung einen Bereich bildet, der teilweise von den Umschlingungsmitteln begrenzt ist und in welchen der Stängel im Wesentlichen quer zur bestimmungsgemässen Abstreifrichtung eingeführt werden kann. Dieser Bereich kann sodann bei eingeführtem Stängel vollständig von den Umschlingungsmitteln und gegebenenfalls allfälligen weiteren die Umschlingung bildenden Elementen, z.B. ein starres Bauteil, umschlossen werden und umfangsmässig verkleinert werden, bis der Stängel von den Umschlingungsmitteln und den allfälligen weiteren die Umschlingung bildenden Elementen umschlungen ist. Die Einführbarkeit quer zur Stängellängsrichtung bzw. quer zur Abstreifrichtung weist den Vorteil auf, dass das Einführen wenig Geschicklichkeit erfordert und auch maschinell sehr einfach zu bewerkstelligen ist. Auch ist weniger Vorarbeit erforderlich.

Mit Vorteil verfügt die Abstreifvorrichtung über Einrichtungen wie beispielsweise Zugfedern oder pneumatische Kolben/Zylinder Anordnungen, mit denen während dem Hindurchziehen des Stängels durch die Umschlingung eine bestimmte Zugkraft in Umschlingungsrichtung in den Umschlingungsmitteln sichergestellt werden kann, so dass sich die Umschlingung an den Querschnitt des jeweils gerade von ihr umschlungenen Abschnitts des Stängels anpasst und auch bei sich während dem Hindurchziehen des Stängels durch die Umschlingung verändernden Stängelquerschnitten immer mit einer im Wesentlichen konstanten Kraft an der Oberfläche des Stängels anliegt.

Ist der Abstreifer der Vorrichtung derartig ausgebildet, dass die Umschlingung vollständig aus biegeelastischen oder biegeschlaffen und in Umschlingungsrichtung zugfesten Umschlingungsmitteln gebildet, was bevorzugt ist, so kann, zumindest bei runden Stängelquerschnitten, über den gesamten Umfang des Stängels ein gleichmässiges Anliegen der Umschlingungsmittel an der Oberfläche des Stängels erreicht werden.

Dabei ist es in einer ersten Variante bevorzugt, dass der Abstreifer derartig ausgebildet ist, dass die Umschlingung von einem durchgehenden Abschnitt eines einzigen Umschlingungsmittels gebildet wird, also als durchgehende Schlinge um den Stängeln ausgebildet wird. Derartige Umschlingungen lassen sich besonders einfach realisieren. Mit Vorteil ist ein derartiger Abstreifer zudem derartig ausgebildet, dass die Umschlingungsmittel in der Schlingenmitte an einer Tragstruktur befestigt sind, um sich beim Hindurchziehen des Stängels durch die Umschlingung nicht in Durchzugsrichtung zu neigen.

In einer zweiten Variante ist es bevorzugt, dass der Abstreifer derartig ausgebildet ist, dass die Umschlingung von mehreren separaten Abschnitten gebildet wird oder solche umfasst, bevorzugterweise von genau zwei separaten solchen Abschnitten gebildet ist oder genau zwei separate solche Abschnitte umfasst, welche von einem einzigen oder von mehreren Umschlingungsmitteln bereitgestellt werden. Die Umschlingung ist also in mehrere Teilumfangsbereiche unterteilt, welche von separaten Abschnitten ausschliesslich von den biegeelastischen oder biegeschlaffen Umschlingungsmitteln gebildet sind oder zusätzlich über einen Teilbereich auch noch von anderen Elementen gebildet sein können, z.B. von einem starren Bauteil. Die Abschnitte der biegeelastischen oder biegeschlaffen Umschlingungsmittel können ausserhalb des von ihnen gebildeten Umfangsbereichs der Umschlingung mit ihren beiden Enden, bevorzugterweise in der Nähe des Stängels, an einer Tragstruktur befestigt sein, so dass eine Umschlingung resultiert, die in Durchzugsrichtung des Stängels bzw. in Stängellängsrichtung eine relativ hohe Stabilität aufweist.

Bevorzugterweise ist der Abstreifer derartig ausgebildet, dass er in der Beschickungsstellung einen Bereich bildet, der zwischen zwei, bevorzugterweise von einem gemeinsamen Ausgangspunkt, voneinander wegführenden Abschnitten der Umschlingungsmittel gebildet ist. Dieser Bereich kann sodann nach dem Einführen des Stängelendes in denselben durch Überkreuzen dieser beiden Abschnitte der Umschlingungsmittel vollständig umschlossen und umfangsmässig verkleinert werden, bis der Stängel von den Umschlingungsmitteln und den allfälligen weiteren die Umschlingung bildenden Elementen umschlungen ist. Beispielsweise stellt der Abstreifer zwei direkt aufeinander folgende Abschnitte eines Umschlingungsmittels derartig bereit, dass diese einen U-förmigen oder V-förmigen Bereich bilden, dessen Öffnungsweite um ein Mehrfaches grösser ist als der Durchmesser des Stängels. Sodann wird der Stängel mit einem Ende quer zur Abstreifrichtung bzw. quer zur Stängellängsrichtung in den von den beiden Schenkeln der U- oder V-Form begrenzten Bereich einge führt. Anschliessend bildet der Abstreifer durch Überkreuzen der freien Enden der Schenkel der U- oder V-Form eine Schlinge um das Ende des Stängels und verkleinert die Schlinge sodann, bis der Stängel vollständig von den Umschlingungsmitteln umschlungen ist.

In einer bevorzugten Variante ist der Abstreifer derartig ausgebildet, dass der zuvor erwähnte Bereich in der Beschickungsstellung zwischen zwei von einem gemeinsamen Ausgangspunkt voneinander wegführenden Abschnitten der Umschlingungsmittel gebildet wird und dass dieser gemeinsame Ausgangspunkt von einer Stelle gebildet ist, an der sich die beiden Abschnitte der Umschlingungsmittel überkreuzen. Auf diese Weise können diese Abschnitte voneinander getrennt sein, z.B. durch weitere Abschnitte des gleichen Umschlingungsmittels, welche nicht an der Umschlingung.beteiligt sind, und können auch von separaten Umschlingungsmitteln gebildet sein.

Dabei ist es weiter bevorzugt, dass der Abstreifer derartig ausgebildet ist, dass das Überkreuzen der dem gemeinsamen Ausgangspunkt abgewandten Bereiche der beiden Abschnitte derartig erfolgt, dass an dieser Überkreuzung in Abstreifrichtung gesehen eine Abfolge der beiden Abschnitte vorliegt, welche umgekehrt zu der Abfolge ist, welche bei der den gemeinsamen Ausgangspunkt bildenden Überkreuzung vorliegt. Auf diese Weise ergibt sich eine erhöhten Stabilität in Abstreif- bzw. Stängellängsrichtung und zudem der Vorteil, dass etwaige Verschmutzungen der zum Abstreifen verwendeten Abschnitte der Umschlingungsmittel durch die zyklische Relativbewegung derselben zueinander beim Herstellen und Aufheben der Umschlingung abgestreift werden. Es ergibt sich also eine Art Selbstreinigungseffekt.

MitVorteil weist der Abstreifer zwei Schwenkarme auf, an denen jeweils ein Ende eines der beiden Abschnitte der Umschlingungsmittel angeordnet ist und ist dabei derartig ausgestaltet, dass das Überkreuzen der beiden Abschnitte durch ein Verschwenken der Schwenkarme erfolgt. Derartige Abstreiferkonstruktionen begünstigen ein einfaches Einführen des Stängelendes und ermöglichen eine stabile Führung der Enden der beiden Abschnitte der Umschlingungsmittel.

Dabei können die Abstände zwischen dem Befestigungsort des Endes des jeweiligen Abschnitts zur Schwenkachse des jeweiligen Schwenkarms bei beiden Schwenkarmen gleich gross oder unterschiedlich gross sein. Im letztgenannten Fall ergibt sich, insbesondere wenn der kleinere dieser Abstände weniger als 80% des grösseren dieser Abstände beträgt, der Vorteil, dass sich die an den Schwenkarmen befestigten Enden der beiden Abschnitte beim Überkreuzen nicht treffen, wodurch die Gefahr eines Verhakens deutlich herabgesetzt wird.

Auch ist es dabei bevorzugt, dass der Abstreifer derartig ausgebildet ist, dass das Verschwenken der Schwenkarme unter einer Überwindung von federelastischen Rückstellkräften erfolgt, welche bei Abwesenheit von Betätigungskräften zum Verschwenken der Schwenkarme eine Rückstellung der Schwenkarme in die Ausgangsstellung (Beschickungsstellung) bewirken, in welcher die zwei Abschnitte der Umschlingungsmittel voneinander wegführen und dabei einen Bereich zwischen sich bilden, in welchen ein Stängel im Wesentlichen quer zur Abstreifrichtung eingeführt werden kann.

Hierdurch wird es möglich, den Abstreifer derartig auszubilden, dass die Betätigungskräfte zum Verschwenken der Schwenkarme ausschliesslich über die daran angeordneten Enden der Abschnitte der Umschlingungsmittel auf die Schwenkarme übertragen werden, indem, z.B. von dem gemeinsamen Ausgangspunkt her, eine Zugkraft auf diese Abschnitte der Umschlingungsmittel ausgeübt wird, wenn die Umschlingung hergestellt werden soll, und diese Zugkraft aufgehoben wird, wenn die Umschlingung aufgehoben werden soll bzw. die Ausgangsstellung (Beschickungsstellung) wieder hergestellt werden soll. Eine solche Ausführungsvariante der Abstreifvorrichtung ist bevorzugt, weil sie einfach zu realisieren ist und sich durch die zyklische Längsbewegung der zum Abstreifen verwendeten Abschnitte der Umschlingungsmittel ein verbesserter Selbstreinigungseffekt ergibt, welcher besonders ausgeprägt ist, wenn der Ausgangspunkt der beiden die Umschlingung bildenden Abschnitte - wie zuvor als bevorzugte Ausführungsform beschrieben - von einer Kreuzungsstelle derselben gebildet wird.

Alternativ ist es möglich, den Abstreifer derartig auszubilden, dass die Betätigungskräfte zum Verschwenken der Schwenkarme nicht oder nicht ausschliesslich über die daran angeordneten Enden der Abschnitte der Umschlingungsmittel auf die Schwenkarme übertragen werden, wobei es weiter bevorzugt ist, dass im bestimmungsgemässen Betrieb mit Vorteil kontinuierlich, insbesondere von einem gemeinsamen Ausgangspunkt her, eine konstante oder federelastische Zugkraft auf diese Abschnitte der Umschlingungsmittel ausgeübt wird.

Bevorzugterweise weist der Abstreifer als Umschlingungsmittel Schnüre, Seile oder Bandmaterialien aus Kunststoff, z.B. Polyamid, und/oder Metall, insbesondere aus Edelstahl, auf. Derartige Umschlingungsmittel sind kommerziell als Meterware erhältlich und entsprechend kostengünstig.

Dabei ist es von Vorteil, wenn der Abstreifer derartig ausgebildet ist, dass die Schnur, das Seil oder das Bandmaterial fortschreitend oder intervallweise durch neues entsprechendes Material ersetzt wird, also beispielsweise fortschreitend oder intervallweise in seiner Längsrichtung verschoben wird, damit verschlissene und/- oder verschmutzte Abschnitte durch neue ersetzt werden.

Ein dritter Aspekt der Erfindung betrifft eine Anordnung zur Durchführung des Verfahrens gemäss dem ersten Aspekt der Erfindung, welche eine Abstreifvorrichtung gemäss dem zweiten Aspekt der Erfindung umfasst sowie eine Einzugsvorrichtung zum Hindurchziehen des Stängels in Stängellängsrichtung durch die von der Abstreifvorrichtung gebildete Umschlingung, unter einem Abstreifen der Blätter und/oder Blüten vom Stängel. Derartige Anordnungen stellen eine bevorzugte Handelsform der Erfindung dar.

Ein vierter und letzter Aspekt der Erfindung betrifft die Verwendung der Abstreifvorrichtung gemäss dem zweiten Aspekt der Erfindung oder der Anordnung gemäss dem dritten Aspekt der Erfindung zum Abstreifen von Blättern und/oder Blüten von einem Stängel, insbesondere zum Abstreifen von Cannabisblättern und/oder Cannabisblüten von einem Stängel oder von Hopfenblättern und/oder Hopfendolden von einem Stängel.

### Kurze Beschreibung der Zeichnungen

Weitere bevorzugte Ausführungen der Erfindung ergeben sich aus den abhängigen Ansprüchen und aus der nun folgenden Beschreibung anhand der Figuren. Dabei zeigen:
die Figuren 1a-1e Vorderansichten einer ersten erfindungsgemässen Abstreifvorrichtung in verschiedenen Betriebszuständen;
die Figuren 2a-2e Vorderansichten einer zweiten erfindungsgemässen Abstreifvorrichtung in verschiedenen Betriebszuständen;
die Figuren 3a-3d Vorderansichten einer dritten nicht erfindungsgemässen Abstreifvorrichtung in verschiedenen Betriebszuständen; und
die Figuren 4a-4e Vorderansichten einer vierten erfindungsgemässen Abstreifvorrichtung in verschiedenen Betriebszuständen.

### Wege zur Ausführung der Erfindung

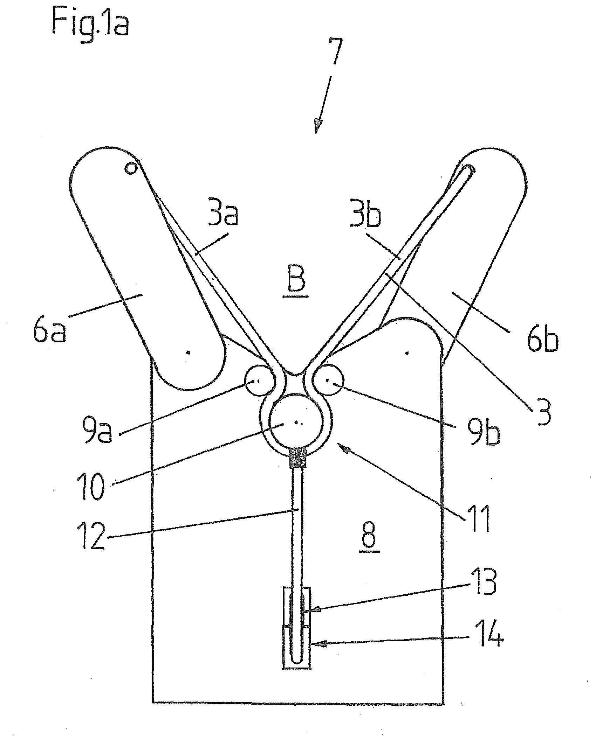

Die Figuren 1a bis 1e zeigen Vorderansichten einer ersten erfindungsgemässen Abstreifvorrichtung in verschiedenen Betriebszuständen bei der Durchführung des erfindungsgemässen Verfahrens.

Wie zu erkennen ist, umfasst die Abstreifvorrichtung eine Tragstruktur 8 in Form einer massiven Edelstahlplatte, welche an ihrem oberen Ende V-förmig ausgebildet ist und zwei Schwenkarme 6a, 6b trägt. Die Schwenkarme 6a, 6b sind symmetrisch zur V-Form der Oberkante der Platte 8 mit einem Abstand zueinander verschwenkbar an der Platte 8 gelagert, und zwar der erste Schwenkarm 6a auf der Vorderseite der Platte 8, und der rechte Schwenkarm 6b auf der Rückseite der Platte 8. Die Schwenkarme 6a, 6b sind mit Federmitteln (nicht gezeigt) gekoppelt, welche bewirken, dass zum Verschwenken der Schwenkarme 6a, 6b aufeinander zu federelastische Rückstellkräfte überwunden werden müssen, welche bei Abwesenheit von Betätigungskräften zum Verschwenken der Schwenkarme 6a, 6b eine Rückstellung der Schwenkarme 6a, 6b in eine Ausgangsstellung (Beschickungsstellung)bewirken. An den freien Enden der Schwenkarme 6a, 6b sind die Enden eines biegeschlaffen zugfesten Seils 3 (anspruchsgemässe biegeschlaffe zugfeste Umschlingungsmittel) befestigt, und zwar an der Rückseite des linken Schwenkarms 6a und an der Vorderseite des rechten Schwenkarms 6b. Das Seil 3 ist in seiner Mitte auf der Vorderseite der Platte 8 mittels zweier Umlenkrollen 9a, 9b und einer Rückhalterolle 10 unterhalb der Oberkante der Tragstruktur 8 zu einer nach unten weisenden Schlaufe 11 geformt. Am untersten Punkt dieser Schlaufe 11 ist ein Antriebsseil 12 angekoppelt, welches über eine Umlenkrolle 13 und einen Durchbruch 14 in der Platte 8 zu einem Antrieb (nicht gezeigt) auf der Rückseite der Platte 8 geführt ist, welcher zur Betätigung der Vorrichtung eine Zugkraft auf das Antriebsseil 12 ausüben kann. Das Seil 3 wird durch die Federmittel der Schwenkarme 6a, 6b permanent unter einer Zugspannung gehalten.

Wie im Folgenden genauer erläutert wird, wird auf diese Weise ein anspruchsgemässer Abstreifer 7 bereitgestellt, mit dem eine Umschlingung 2 um einen abzustreifenden Stängel gebildet werden kann, zur Ermöglichung eines Abstreifen von Blättern und/oder Blüten von dem Stängel 1 bei einem Hindurchziehen des Stängels 1 durch diese Umschlingung 2 in Stängellängsrichtung.

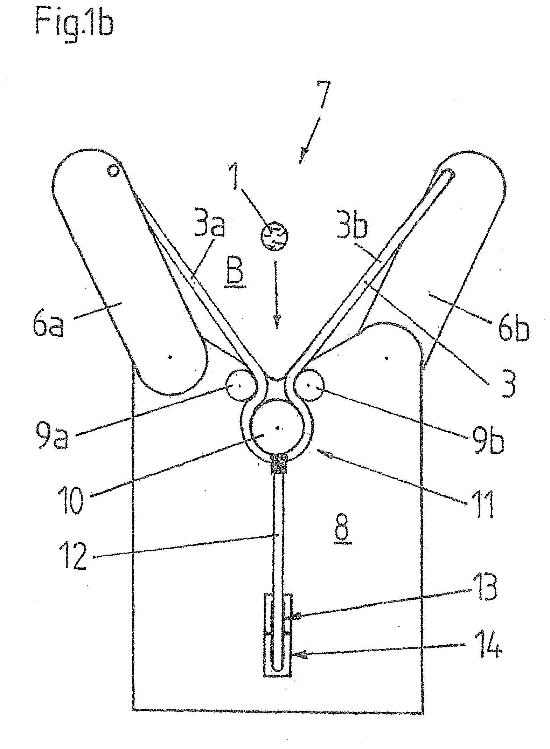

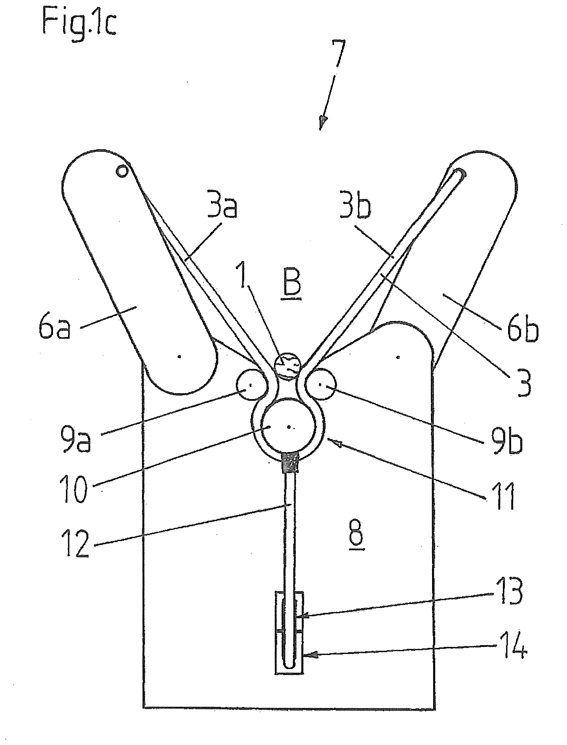

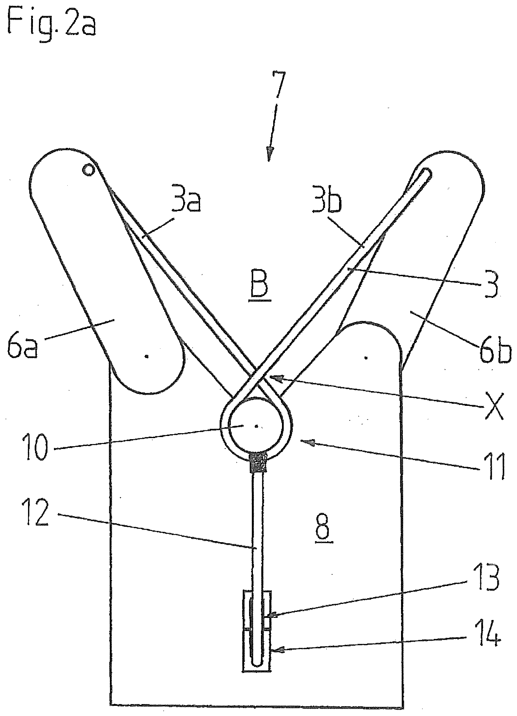

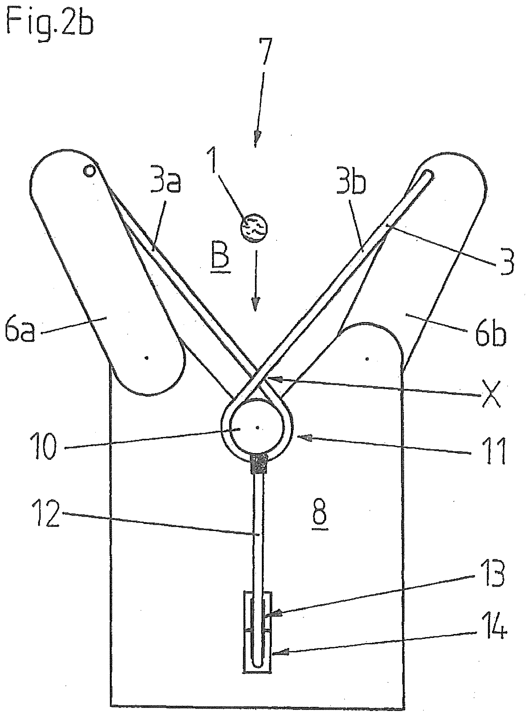

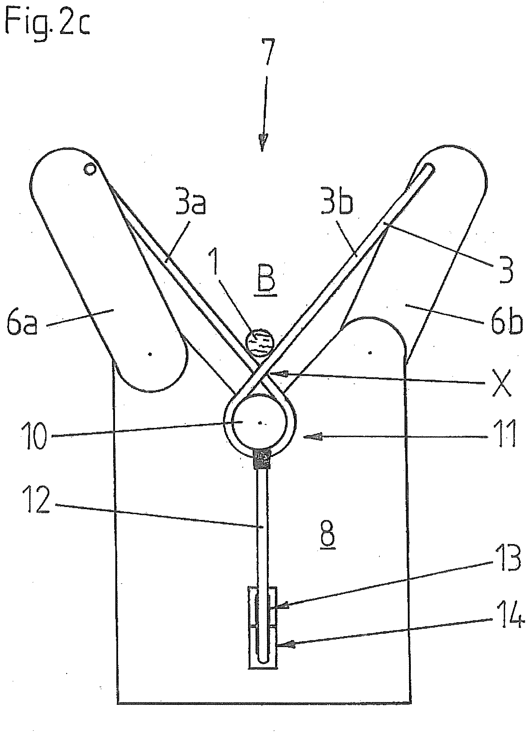

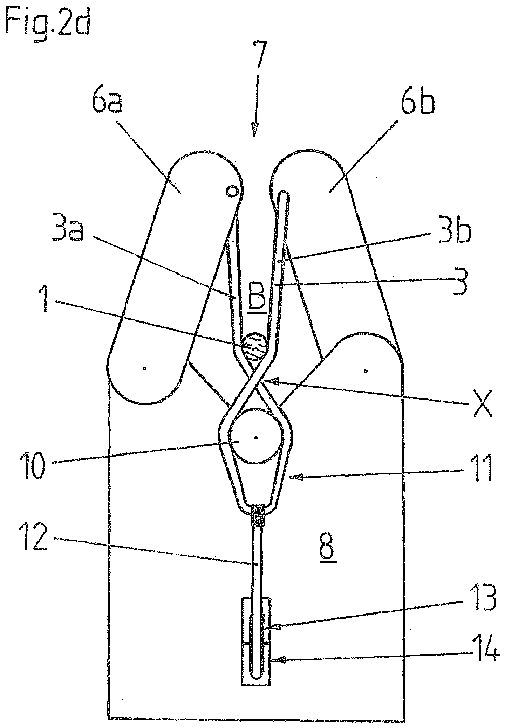

Fig. 2a zeigt die Abstreifvorrichtung mit dem Abstreifer 7 in der Beschickungsstellung. Wie in Zusammenschau mit den Figuren 1a und 1c zu erkennen ist, welche das Beschicken der Abstreifvorrichtung mit einem abzustreifenden Stängel 1 zeigen, bildet der Abstreifer 7 in der Beschickungsstellung einen V-förmigen Beschickungsbereich B aus, welcher an den Seiten von den durch die Schlaufe 11 getrennten Abschnitten 3a und 3b des Seils 3 und im Grund der V-Form von der Oberkante der Platte 8 begrenzt ist. Da dieser Bereich nach oben offen ist, kann das Ende des Stängels 1 quer zur bestimmungsgemässen Abstreifrichtung bzw. quer zur Stängellängsrichtung in diesen Bereich B eingebracht werden (siehe Fig. 1b), bis es auf der Oberkante der Platte 8 aufliegt (siehe Fig. 1c).

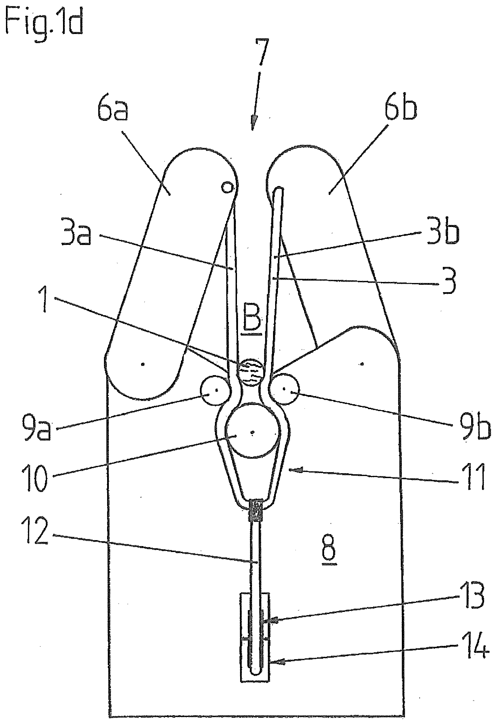

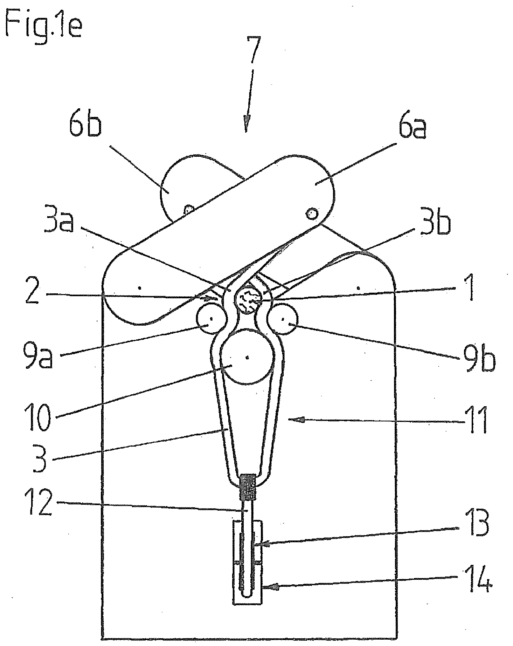

Kurz bevor oder sobald das Stängelende 1 auf der Oberkante der Platte 8 zu liegen kommt, wird auf das Antriebsseil 12 mit dem Antrieb (nicht gezeigt) eine Zugkraft ausgeübt, welche grösser ist als die von den Federmitteln (nicht gezeigt) der Schwenkarme 6a, 6b bereitgestellte Rückstellkraft, so dass die Schlaufe 11 nach unten gezogen wird und die Schwenkarme 6a, 6b durch die von den daran befestigten Enden des Seils 3 ausgeübte Zugkraft aufeinander zu geschwenkt werden (siehe Fig. 1d). Dabei überkreuzen sich die Abschnitte 3a und 3b des Seils 3, was dazu führt, dass der Bereich B, in welchem der Stängel 1 angeordnet ist, vollständig umschlossen und verkleinert wird, bis der Stängel 1 von den Seilabschnitten 3a und 3b und der Oberkante der Platte 8 umschlungen ist (siehe Fig. 1e).

Nun wird der Stängel 1 in Stängellängsrichtung durch die so gebildete Umschlingung 2 hindurchgezogen und dabei die an ihm befindlichen Blätter und/oder Blüten vom Stängel 1 abgestreift. Dabei folgt die Umschlingung 2 dem abnehmenden Stängeldurchmesser, indem über den Antrieb des Antriebsseiles 12 sichergestellt wird, dass während dem Abstreifen immer eine bestimmte Zugspannung im Zugseil 12 bzw. im Seil 3 vorliegt.

Nachdem der Stängel 1 vollständig abgestreift ist, wird die mit dem Antrieb auf das Antriebsseil 12 ausgeübte Zugkraft aufgehoben und es erfolgt eine Rückstellung des Abstreifers 7 in die in Fig. 1a gezeigte Beschickungsstellung infolge der durch die Federmittel der Schwenkarme 6a, 6b bereitgestellten Rückstellkräfte.

Die Figuren 2a bis 2e zeigen Vorderansichten einer zweiten erfindungsgemässen Abstreifvorrichtung in verschiedenen Betriebszuständen bei der Durchführung des erfindungsgemässen Verfahrens. Diese Abstreifvorrichtung unterscheidet sich von der gemäss den Figuren 1a-1e lediglich dadurch, dass die Führung des Seils 3 in dessen Mitte und die Bildung der Schlaufe 11 anders erfolgt als bei der ersten Abstreifvorrichtung, mit dem Resultat, dass die Umschlingung des Stängels 1 ausschliesslich mit den Abschnitten 3a und 3b des biegeschlaffen Seils 3 gebildet wird, also ohne Beteiligung der Oberkante der Platte 8. Hierzu ist die Platte 8 an ihrem oberen V-förmig ausgebildeten Ende tiefer eingeschnitten und die Rückhalterolle 10 steht nach oben über die Oberkante der Platte 8 hinaus. Die Führungsrollen 9a, 9b der ersten Abstreifvorrichtung sind entfallen und das Seil 3 umschlingt in seiner Mitte die Rückhalterolle 10 unter Bildung der Schlaufe 11. Dabei überkreuzen sich die von der Rückhalterolle 10 wegführenden Abschnitte 3a, 3b des Seils 3 im Bereich dicht oberhalb der Rückhalterolle 10.

Das Beschicken dieser Abstreifvorrichtung und deren Betätigung und allgemeine Funktionsweise ist identisch wie bei der ersten Abstreifvorrichtung, weshalb hierzu auf die vorherige Beschreibung der Figuren 1a-1e verwiesen werden kann, welche den Ablauf in analoger Weise wie die Figuren 2a-2e darlegen.

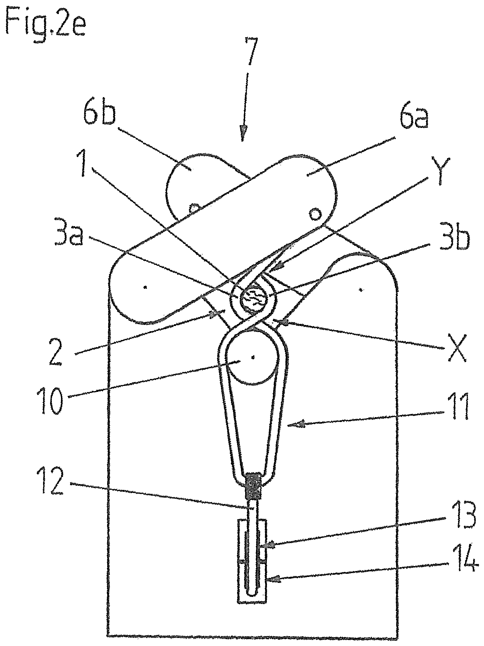

Wie insbesondere in Fig. 2e gut erkennbar ist, ist die Überkreuzungsrichtung der Abschnitte 3a, 3b des Seils 3 im Bereich der Rückhalterolle 10 derartig gewählt, dass in Abstreifrichtung gesehen an dieser Überkreuzungsstelle X eine umgekehrter Reihenfolge vorliegt wie an der Überkreuzungsstelle Y, welche beim Umschlingen des Stängels 1 gebildet wird. Mit anderen Worten gesagt liegt an der unteren Überkreuzungsstelle X der Abschnitt 3b vorne während an der oberen Überkreuzungsstelle Y der Abschnitt 3a vorne liegt.

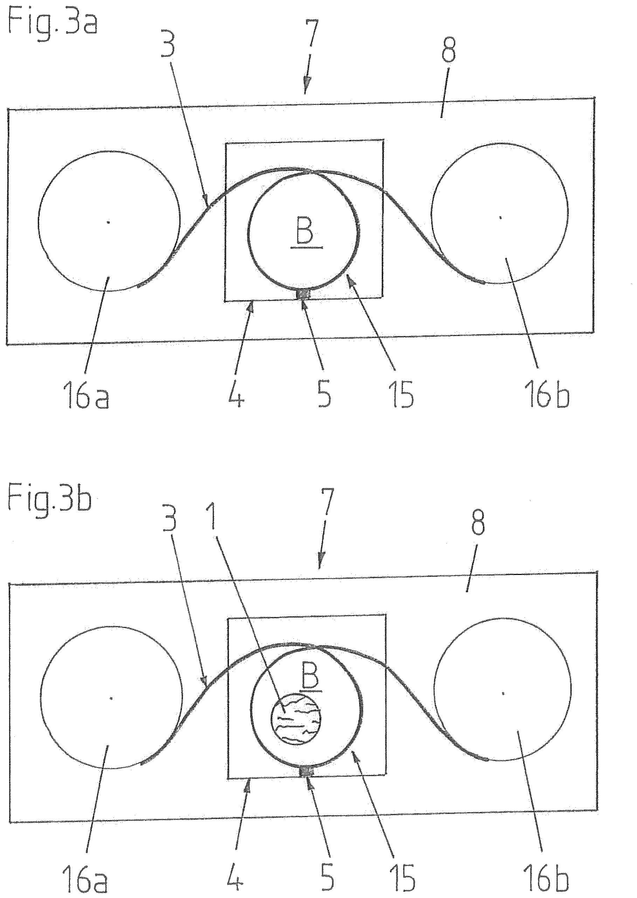

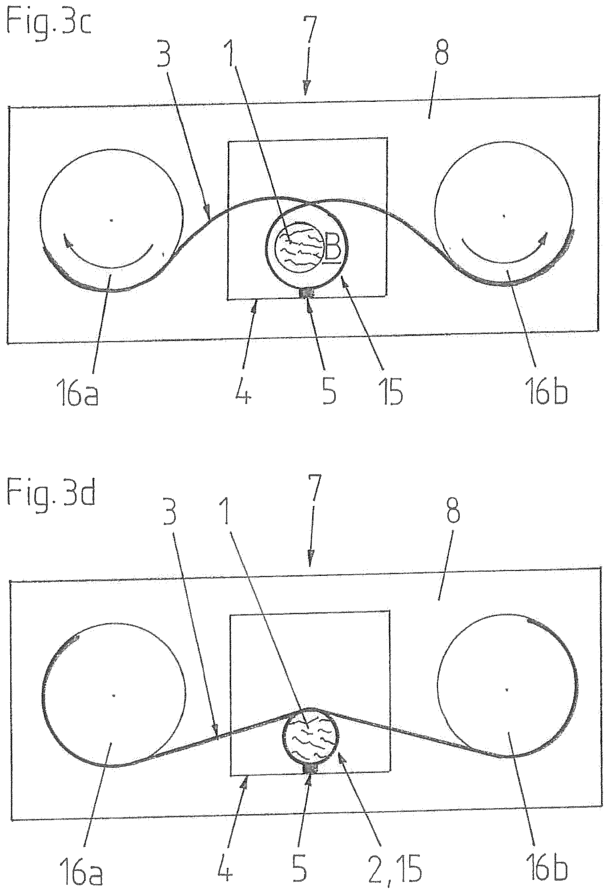

Die Figuren 3a bis 3d zeigen Vorderansichten einer dritten, nicht erfindungsgemässen Abstreifvorrichtung in verschiedenen Betriebszuständen bei der Durchführung eines erfindungsgemässen Verfahrens.

Diese Abstreifvorrichtung umfasst eine Schlinge 15 aus einem biegeelastischen Edelstahlseil 3, dessen Enden an zwei kreisrunden Antriebsscheiben 16a, 16b befestigt sind. Die Antriebsscheiben 16a, 16b sind rotierbar an einer Tragstruktur 8 gelagert und können mit einem Antrieb (nicht gezeigt) gegenläufig verdreht werden. Die Schlinge 15 ist vor einer Durchtrittsöffnung 4 der Tragstruktur 8 angeordnet und in ihrer Mitte mit einem Steg 5 an der Tragstruktur 8 befestigt.

Wie im Folgenden genauer erläutert wird, wird auf diese Weise ein weiterer nicht anspruchsgemässer Abstreifer 7 bereitgestellt, mit dem eine Umschlingung 2 um einen abzustreifenden Stängel 1 gebildet werden kann, zur Ermöglichung eines Abstreifen von Blättern und/oder Blüten von dem Stängel 1 bei einem Hindurchziehen des Stängels 1 durch diese Umschlingung 2 in Stängellängsrichtung.

Fig. 3a zeigt die Abstreifvorrichtung mit dem Abstreifer 7 in der Beschickungsstellung. Wie in Zusammenschau mit Fig. 3b zu erkennen ist, welche die Abstreifvorrichtung beim Beschicken mit einem abzustreifenden Stängel 1 zeigt, bildet der Abstreifer 7 in der Beschickungsstellung einen von der Stahlseilschlinge 15 umschlossenen Beschickungsbereich B aus, in welchen der Stängel 1 in Abstreifrichtung bzw. Stängellängsrichtung eingeführt wird. Dieser Bereich B weist in der Beschickungsstellung einen Durchmesser auf, der einem Mehrfachen des Stängeldurchmessers entspricht.

Sobald das Stänge.lende 1 im Beschickungsbereich B angeordnet ist, werden die Antriebsscheiben 16a und 16b mit dem Antrieb (nicht gezeigt) gegenläufig verdreht, derart, dass sich die Schlinge 15 zusammenzieht und der Bereich B verkleinert wird (siehe Fig. 3c), bis der Stängel 1 von der Seilschlinge 15 umschlungen ist (siehe Fig. 1e).

Nun wird der Stängel 1 in Stängellängsrichtung durch die so gebildete Umschlingung 2 hindurchgezogen und dabei die an ihm befindlichen Blätter und/oder Blüten vom Stängel 1 abgestreift. Dabei folgt die Umschlingung 2 dem abnehmenden Stängeldurchmesser, indem über den Antrieb der Antriebsscheiben 16a, 16b sichergestellt wird, dass während dem Abstreifen immer eine bestimmte Zugspannung im Seil 3 vorliegt.

Nachdem der Stängel 1 vollständig abgestreift ist, werden die Antriebsscheiben 16a, 16b mit dem Antrieb zurückgedreht, bis die in Fig. 3a gezeigte Beschickungsstellung wieder erreicht ist.

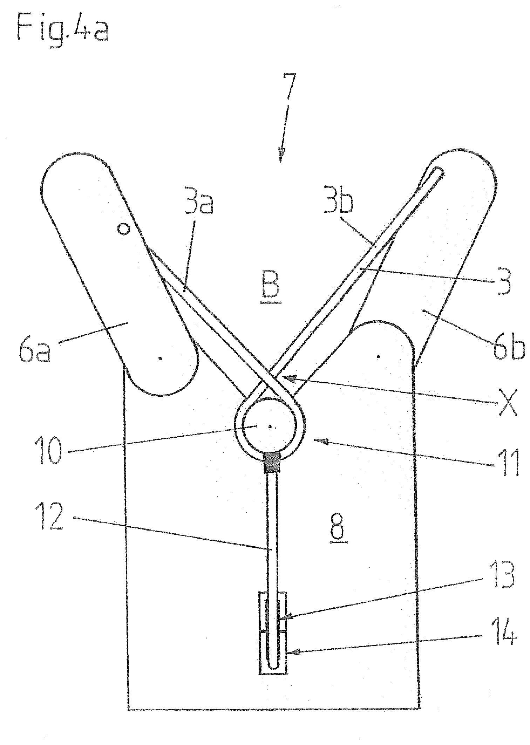

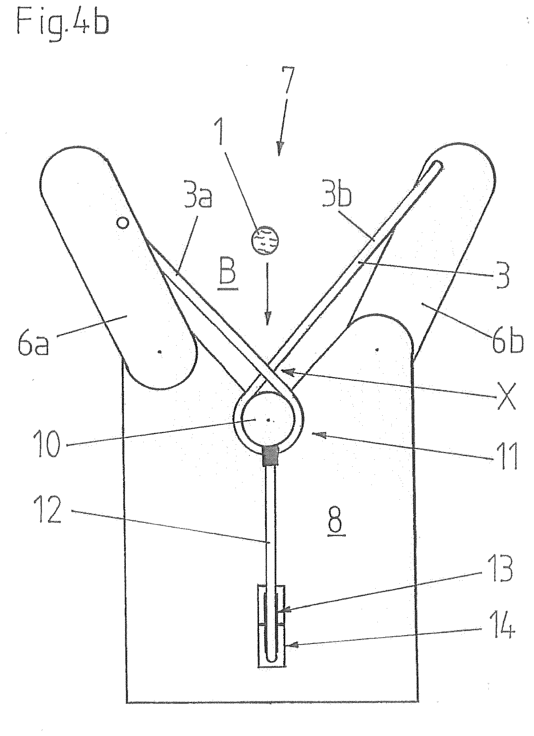

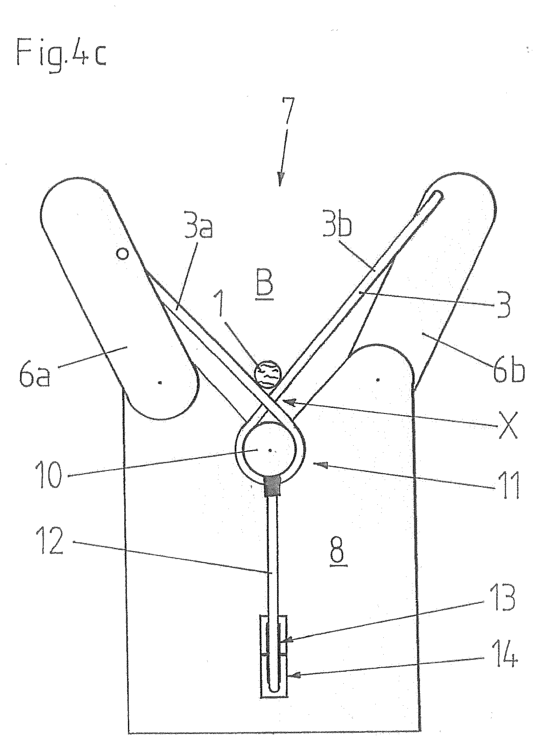

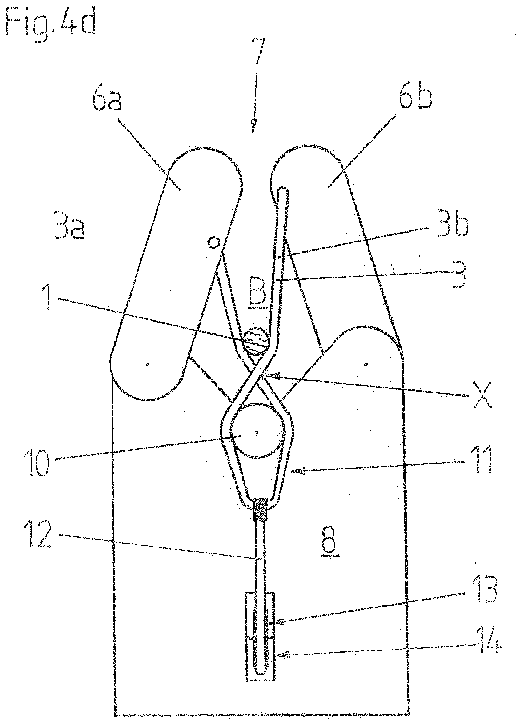

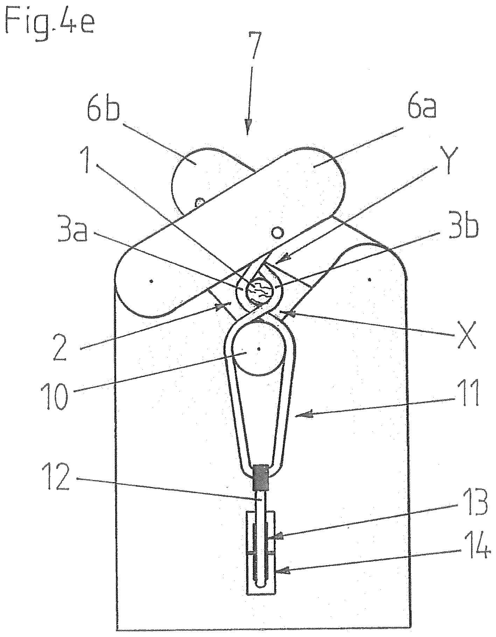

Die Figuren 4a-4e zeigen Vorderansichten einer vierten erfindungsgemässen Abstreifvorrichtung in verschiedenen Betriebszuständen bei der Durchführung des erfindungsgemässen Verfahrens. Diese Abstreifvorrichtung unterscheidet sich von der gemäss den Figuren 2a-2e lediglich dadurch, dass die Abstände zwischen dem Befestigungsort des Endes des jeweiligen Abschnitts 3a, 3b zur Schwenkachse des jeweiligen Schwenkarms bei beiden Schwenkarmen 6a, 6b nicht gleich gross sind, wie dies bei der Ausführung gemäss den Figuren 2a-2e der Fall ist, sondern dass diese Abstände unterschiedlich gross sind. Im dargestellten Fall beträgt der Abstand zwischen dem Befestigungsort des Endes des Abschnitts 3a am Schwenkarm 6a zu dessen Schwenkachse ca. 70% des Abstands zwischen dem Befestigungsort des Endes des Abschnitts 3b am Schwenkarm 6b zu dessen Schwenkachse.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zum Abstreifen von Blättern und/oder Blüten von einem Stängel (1), insbesondere zum Abstreifen von Cannabisblättern und/oder Cannabisblüten von einem Stängel (1), umfassend die Schritte:
a) Bilden einer Umschlingung (2) um den Stängel (1), welche zumindest in einem Teilbereich aus biegeelastischen oder biegeschlaffen und in Umschlingungsrichtung zugfesten Umschlingungsmitteln (3, 3a, 3b) gebildet ist; und
b) Hindurchziehen des Stängels (1) in Stängellängsrichtung durch die Umschlingung (2) unter einem Abstreifen der Blätter und/oder Blüten vom Stängel (1),
wobei der Stängel (1) quer zur Abstreifrichtung in einen von den Umschlingungsmitteln (3, 3a, 3b) teilweise begrenzten Bereich (B) eingeführt wird und dieser Bereich (B) sodann vollständig von den Umschlingungsmitteln (3, 3a, 3b) und allfälligen weiteren die Umschlingung bildenden Elementen (8) umschlossen wird,
**dadurch gekennzeichnet, dass** dieser Bereich (B) umfangsmässig verkleinert wird, bis der Stängel (1) vollständig oder zumindest zum grössten Teil von den Umschlingungsmitteln (3, 3a, 3b) und den allfälligen weiteren die Umschlingung (2) bildenden Elementen (8) umschlungen ist.

2. Verfahren nach einem der vorangehenden Ansprüche, wobei während dem Hindurchziehen des Stängels (1) durch die Umschlingung (2) eine bestimmte Zugkraft in Umschlingungsrichtung in den Umschlingungsmitteln (3, 3a, 3b) sichergestellt wird.

3. Verfahren nach einem der vorangehenden Ansprüche, wobei die Umschlingung (2) ausschliesslich aus biegeelastischen oder biegeschlaffen und in Umschlingungsrichtung zugfesten Umschlingungsmitteln (3, 3a, 3b) gebildet wird.

4. Verfahren nach Anspruch 3, wobei die Umschlingung (2) von einem durchgehenden Abschnitt eines einzigen Umschlingungsmittels (3) gebildet wird.

5. Verfahren nach einem der Ansprüche 1 bis 3, wobei die Umschlingung (2) von mehreren separaten Abschnitten (3a, 3b), insbesondere von genau zwei separaten Abschnitten (3a, 3b) gebildet wird oder solche umfasst, welche von einem einzigen oder von mehreren Umschlingungsmitteln (3) bereitgestellt werden.

6. Verfahren nach einem der vorangehenden Ansprüche, wobei der Stängel (1) quer zur Abstreifrichtung in einen Bereich (B) eingeführt wird, der zwischen zwei, insbesondere von einem gemeinsamen Ausgangspunkt (X), voneinander wegführenden Abschnitten (3a, 3b) der Umschlingungsmittel (3) gebildet ist, und wobei dieser Bereich (B) sodann durch Überkreuzen dieser beiden Abschnitte (3a, 3b) der Umschlingungsmittel (3) vollständig umschlossen und umfangsmässig verkleinert wird, bis der Stängel (1) von den Umschlingungsmitteln (3) und den allfälligen weiteren die Umschlingung (2) bildenden Elementen (8) umschlungen ist.

7. Verfahren nach Anspruch 6, wobei der Stängel (1) quer zur Abstreifrichtung in einen Bereich (B) eingeführt wird, der zwischen zwei von einem gemeinsamen Ausgangspunkt (X) voneinander wegführenden Abschnitten (3a, 3b) der Umschlingungsmittel (3) gebildet ist und wobei dieser gemeinsame Ausgangspunkt (X) von einer Stelle gebildet wird, an der sich die beiden Abschnitte (3a, 3b) überkreuzen.

8. Verfahren nach Anspruch 7, wobei das Überkreuzen der dem gemeinsamen Ausgangspunkt (X) abgewandten Bereiche der beiden Abschnitte (3a, 3b) derartig erfolgt, dass an dieser Überkreuzung (Y) in Abstreifrichtung gesehen eine Abfolge der beiden Abschnitte (3a, 3b) vorliegt, welche umgekehrt ist zu der Abfolge, welche bei der den gemeinsamen Ausgangspunkt (X) bildenden Überkreuzung vorliegt.

9. Verfahren nach einem der Ansprüche 6 bis 8, wobei das Überkreuzen der beiden Abschnitte (3a, 3b) durch ein Verschwenken zweier Schwenkarme (6a, 6b) erfolgt, an denen jeweils ein Ende eines der beiden Abschnitte (3a, 3b) angeordnet ist.

10. Verfahren nach Anspruch 9, wobei die Abstände zwischen dem Befestigungsort des Endes des jeweiligen Abschnitts (3a, 3b) zur Schwenkachse des jeweiligen Schwenkarms bei beiden Schwenkarmen (6a, 6b) gleich gross oder unterschiedlich gross sind, und insbesondere, wobei der kleinere dieser Abstände weniger als 80% des grösseren dieser Abstände beträgt.

11. Verfahren nach einem der Ansprüche 9 bis 10, wobei das Verschwenken der Schwenkarme (6a, 6b) unter einer Überwindung von federelastischen Rückstellkräften erfolgt, welche bei Abwesenheit von Betätigungskräften zum Verschwenken der Schwenkarme (6a, 6b) eine Rückstellung der Schwenkarme in eine Beschickungsstellung bewirken, in welcher die zwei Abschnitte (3a, 3b) der Umschlingungsmittel (3) voneinander wegführen und dabei einen Bereich (B) zwischen sich bilden, in welchen ein Stängel (1) im Wesentlichen quer zur Abstreifrichtung eingeführt werden kann.

12. Verfahren nach einem der Ansprüche 9 bis 11, wobei die Betätigungskräfte zum Verschwenken der Schwenkarme (6a, 6b) ausschliesslich über die daran angeordneten Enden der Abschnitte (3a, 3b) der Umschlingungsmittel (3) auf die Schwenkarme (6a, 6b) übertragen werden, indem, insbesondere von einem gemeinsamen Ausgangspunkt (X) her, eine Zugkraft auf diese Abschnitte (3a, 3b) der Umschlingungsmittel (3) ausgeübt wird.

13. Verfahren nach einem der Ansprüche 9 bis 11, wobei die Betätigungskräfte zum Verschwenken der Schwenkarme (6a, 6b) nicht oder nicht ausschliesslich über die daran angeordneten Enden der Abschnitte (3a, 3b) der Umschlingungsmittel (3) auf die Schwenkarme (6a, 6b) übertragen werden, und insbesondere, wobei kontinuierlich und insbesondere von einem gemeinsamen Ausgangspunkt (X) her, eine konstante oder federelastische Zugkraft auf diese Abschnitte (3a, 3b) der Umschlingungsmittel (3) ausgeübt wird.

14. Verfahren nach einem der vorangehenden Ansprüche, wobei als Umschlingungsmittel (3) eine Schnur, ein Seil oder ein Bandmaterial aus Kunststoff und/oder Metall, insbesondere aus Edelstahl, verwendet wird.

15. Verfahren nach Anspruch 14, wobei die Schnur, das Seil oder das Bandmaterial fortschreitend oder intervallweise durch neues entsprechendes Material ersetzt wird.

16. Abstreifvorrichtung zur Verwendung bei der Durchführung des Verfahrens nach einem der vorangehenden Ansprüche, umfassend einen Abstreifer (7) zur Bildung einer Umschlingung (2) um einen abzustreifenden Stängel (1) zum Abstreifen von Blättern und/oder Blüten von dem Stängel (1) bei einem Hindurchziehen des Stängels (1) durch die Umschlingung (2) in Stängellängsrichtung, wobei der Abstreifer (7) über biegeelastische oder biegeschlaffe, zugfeste Umschlingungsmittel (3, 3a, 3b) verfügt und derartig ausgebildet ist, dass im bestimmungsgemässen Einsatz die Umschlingung (2) um den Stängel (1) zumindest in einem Teilbereich von diesen Umschlingungsmitteln (3, 3a, 3b) gebildet ist,
wobei der Abstreifer (7) derartig ausgebildet ist, dass er in einer Beschickungsstellung einen Bereich (B) bildet, der teilweise von den Umschlingungsmitteln (3, 3a, 3b) begrenzt ist und in welchen der Stängel (1) quer zur bestimmungsgemässen Abstreifrichtung eingeführt werden kann, und dass dieser Bereich (B) sodann bei eingeführtem Stängel (1) vollständig von den Umschlingungsmitteln (3, 3a, 3b) und allfälligen weiteren die Umschlingung (2) bildenden Elementen (8) umschlossen werden kann, **dadurch gekennzeichnet, dass** dieser Bereich (B) umfangsmässig verkleinert werden kann, bis der Stängel (1) von den Umschlingungsmitteln (3) und den allfälligen weiteren die Umschlingung (2) bildenden Elementen (8) umschlungen ist.

17. Abstreifvorrichtung nach Anspruch 16, wobei die Vorrichtung über Einrichtungen verfügt, mit denen im bestimmungsgemässen Einsatz beim Hindurchziehen des Stängels (1) durch die Umschlingung (2) eine bestimmte Zugkraft in Umschlingungsrichtung in den Umschlingungsmitteln (3, 3a, 3b) sichergestellt werden kann.

18. Abstreifvorrichtung nach einem der Ansprüche 16 bis 17, wobei der Abstreifer (7) derartig ausgebildet ist, dass im bestimmungsgemässen Einsatz die Umschlingung (2) um den Stängel (1) ausschliesslich von biegeelastischen oder biegeschlaffen und in Umschlingungsrichtung zugfesten Umschlingungsmitteln (3, 3a, 3b) gebildet ist.

19. Abstreifvorrichtung nach Anspruch 18, wobei der Abstreifer derartig ausgebildet ist, dass im bestimmungsgemässen Einsatz die Umschlingung (2) um den Stängel (1) von einem durchgehenden Abschnitt eines einzigen Umschlingungsmittels (3) gebildet ist.

20. Abstreifvorrichtung nach Anspruch 18, wobei der Abstreifer (7) derartig ausgebildet ist, dass im bestimmungsgemässen Einsatz die Umschlingung (2) von mehreren separaten Abschnitten (3a, 3b), insbesondere von genau zwei separaten Abschnitten (3a, 3b) gebildet ist oder solche umfasst, welche von einem einzigen oder von mehreren Umschlingungsmitteln (3) bereitgestellt sind.

21. Abstreifvorrichtung nach einem der Ansprüche 16 bis 20, wobei der Abstreifer (7) derartig ausgebildet ist, dass er in der Beschickungsstellung einen Bereich (B) bildet, der zwischen zwei, insbesondere von einem gemeinsamen Ausgangspunkt (X), voneinander wegführenden Abschnitten (3a, 3b) der Umschlingungsmittel (3) gebildet ist, und dass dieser Bereich (B) sodann durch Überkreuzen dieser beiden Abschnitte (3a, 3b) der Umschlingungsmittel (3) vollständig umschlossen und umfangsmässig verkleinert werden kann, bis der Stängel (1) von den Umschlingungsmitteln (3) und den allfälligen weiteren die Umschlingung (2) bildenden Elementen (8) umschlungen ist.

22. Abstreifvorrichtung nach Anspruch 21, wobei der Abstreifer (7) derartig ausgebildet ist, dass er in der Beschickungsstellung einen Bereich (B) bildet, der zwischen zwei von einem gemeinsamen Ausgangspunkt (X) voneinander wegführenden Abschnitten (3a, 3b) der Umschlingungsmittel (3) gebildet ist, und dass der gemeinsame Ausgangspunkt (X) von einer Stelle gebildet ist, an der sich die beiden Abschnitte (3a, 3b) der Umschlingungsmittel (3) überkreuzen.

23. Abstreifvorrichtung nach Anspruch 22, wobei der Abstreifer (7) derartig ausgebildet ist, dass das Überkreuzen der dem gemeinsamen Ausgangspunkt (X) abgewandten Bereiche der beiden Abschnitte (3a, 3b) derartig erfolgt, dass an dieser Überkreuzung (Y) in Abstreifrichtung gesehen eine Abfolge der beiden Abschnitte (3a, 3b) vorliegt, welche umgekehrt ist zu der Abfolge, welche bei der den gemeinsamen Ausgangspunkt (X) bildenden Überkreuzung (X) vorliegt.

24. Abstreifvorrichtung nach einem der Ansprüche 21 bis 23, wobei der Abstreifer (7) zwei Schwenkarme (6a, 6b) aufweist, an denen jeweils ein Ende eines der beiden Abschnitte (3a, 3b) angeordnet ist, und wobei der Abstreifer (7) derartig ausgestaltet ist, dass das Überkreuzen der beiden Abschnitte (3a, 3b) durch ein Verschwenken der Schwenkarme (6a, 6b) erfolgen kann.

25. Abstreifvorrichtung nach Anspruch 24, wobei die Abstände zwischen dem Befestigungsort des Endes des jeweiligen Abschnitts (3a, 3b) zur Schwenkachse des jeweiligen Schwenkarms bei beiden Schwenkarmen (6a, 6b) gleich gross oder unterschiedlich gross sind, und insbesondere, wobei der kleinere dieser Abstände weniger als 80% des grösseren dieser Abstände beträgt.

26. Abstreifvorrichtung nach einem der Ansprüche 24 bis 25, wobei der Abstreifer (7) derartig ausgebildet ist, dass das Verschwenken der Schwenkarme (6a, 6b) unter einer Überwindung von federelastischen Rückstellkräften erfolgt, welche bei Abwesenheit von Betätigungskräften zum Verschwenken der Schwenkarme (6a, 6b) eine Rückstellung der Schwenkarme (6a, 6b) in eine Beschickungsstellung bewirken, in welcher die zwei Abschnitte (3a, 3b) der Umschlingungsmittel (3) voneinander wegführen und dabei einen Bereich (B) zwischen sich bilden, in welcher ein Stängel (1) quer zur Abstreifrichtung eingeführt werden kann.

27. Abstreifvorrichtung nach einem der Ansprüche 24 bis 26, wobei der Abstreifer (7) derartig ausgebildet ist, dass die Betätigungskräfte zum Verschwenken der Schwenkarme (6a, 6b) ausschliesslich über die daran angeordneten Enden der Abschnitte (3a, 3b) der Umschlingungsmittel (3) auf die Schwenkarme übertragen werden, indem, insbesondere von einem gemeinsamen Ausgangspunkt (X) her, eine Zugkraft auf diese Abschnitte (3a, 3b) der Umschlingungsmittel (3) ausgeübt wird.

28. Abstreifvorrichtung nach einem der Ansprüche 24 bis 26, wobei der Abstreifer (7) derartig ausgebildet ist, dass die Betätigungskräfte zum Verschwenken der Schwenkarme (6a, 6b) nicht oder nicht ausschliesslich über die daran angeordneten Enden der Abschnitte (3a, 3b) der Umschlingungsmittel (3) auf die Schwenkarme (6a, 6b) übertragen werden, und insbesondere, dass im bestimmungsgemässen Betrieb kontinuierlich, insbesondere von einem gemeinsamen Ausgangspunkt (X) her, eine konstante oder federelastische Zugkraft auf diese Abschnitte (3a, 3b) der Umschlingungsmittel (3) ausgeübt wird.

29. Abstreifvorrichtung nach einem der Ansprüche 16 bis 28, wobei der Abstreifer (7) als Umschlingungsmittel eine Schnur, ein Seil (3) oder ein Bandmaterial aus Kunststoff und/oder Metall, insbesondere aus Edelstahl, umfasst.

30. Abstreifvorrichtung nach Anspruch 29, wobei der Abstreifer (7) derartig ausgebildet ist, dass die Schnur, das Seil oder das Bandmaterial fortschreitend oder intervallweise durch neues entsprechendes Material ersetzt wird.

31. Anordnung zur Durchführung des Verfahrens nach einem der Ansprüche 1 bis 15, umfassend eine Abstreifvorrichtung nach einem der Ansprüche 16 bis 30 und eine Einzugsvorrichtung zum Hindurchziehen des Stängels (1) in Stängellängsrichtung durch die von der Abstreifvorrichtung gebildete Umschlingung (2) unter einem Abstreifen der Blätter und/oder Blüten vom Stängel (1).

32. Verwendung der Abstreifvorrichtung nach einem der Ansprüche 16 bis 30 oder der Anordnung nach Anspruch 31 zum Abstreifen von Blättern und/oder Blüten von einem Stängel (1), insbesondere zum Abstreifen von Cannabisblättern und/oder Cannabisblüten von einem Stängel (1) oder von Hopfenblättern und/oder Hopfendolden von einem Stängel (1).

## Claims

1. Method for stripping leaves and/or flowers from a stalk (1), in particular for stripping cannabis leaves and/or cannabis flowers from a stalk (1), comprising the steps:
a) forming of a loop (2) around the stalk (1), which is formed at least in a partial area from loop means (3, 3a, 3b) which are flexurally elastic or flexurally slack and have tensile strength in the direction of the loop; and
b) pulling of the stalk (1) in the longitudinal direction of the stalk through the loop (2) while stripping the leaves and/or flowers from the stalk (1),
wherein the stalk (1) is inserted transversely to the stripping direction into an area (B) partially delimited by the loop means (3, 3a, 3b) and this area (B) is then completely enclosed by the loop means (3, 3a, 3b) and any possible further elements (8) forming the loop,
**characterized in that** this area (B) is circumferentially reduced in size until the stalk (1) is completely or at least for the most part enclosed by the loop means (3, 3a, 3b) and the possible further elements (8) forming the loop.

2. Method according to one of the preceding claims, wherein during the pulling of the stalk (1) through the loop (2) a specific tensile force in the direction of the loop is ensured in the loop means (3, 3a, 3b).

3. Method according to one of the preceding claims, wherein the loop (2) is formed exclusively from loop means (3, 3a, 3b) which are flexurally elastic or flexurally slack and have tensile strength in the direction of the loop.

4. Method according to claim 3, wherein the loop (2) is formed by a continuous section of a single loop means (3).

5. Method according to one of the claims 1 to 3, wherein the loop (2) is formed by several separate sections (3a, 3b), in particular by exactly two separate sections (3a, 3b) or comprises such sections, which are provided by one or more loop means (3).

6. Method according to one of the preceding claims, wherein the stalk (1) is inserted transversely to the stripping direction into an area (B) which is formed between two sections (3a, 3b) of the loop means (3) leading away from each other, in particular from a common starting point (X), and wherein this area (B) is then completely enclosed and circumferentially reduced in size by crossing these two sections (3a, 3b) of the loop means (3) until the stalk (1) is enclosed by the loop means (3) and the possible further elements (8) forming the loop (2) .

7. Method according to claim 6, wherein the stalk (1) is inserted transversely to the stripping direction into an area (B) formed between two sections (3a, 3b) of the loop means (3) leading away from each other from a common starting point (X), and wherein this common starting point (X) is formed by a point at which the two sections (3a, 3b) cross.

8. Method according to claim 7, wherein the crossing of the areas of the two sections (3a, 3b) facing away from the common starting point (X) takes place in such a way that at this crossing (Y) there is a sequence of the two sections (3a, 3b) viewed in the stripping direction which is the reverse of the sequence which is present at the crossing forming the common starting point (X) .

9. Method according to one of the claims 6 to 8, wherein the crossing of the two sections (3a, 3b) is effected by a pivoting of two swivel arms (6a, 6b), on each of which one end of one of the two sections (3a, 3b) is arranged.

10. Method according to claim 9, wherein the distances between the attachment location of the end of the respective section (3a, 3b) to the swivel axis of the respective swivel arm are equal or different for both swivel arms (6a, 6b), and in particular, wherein the smaller of said distances is less than 80% of the larger of said distances.

11. Method according to one of the claims 9 to 10, wherein the pivoting of the swivel arms (6a, 6b) takes place under the overcoming of spring-elastic restoring forces which, in the absence of actuating forces for pivoting the swivel arms (6a, 6b), effect a returning of the swivel arms into a loading position in which the two sections (3a, 3b) of the loop means (3) lead away from each other, thereby forming an area (B) between them into which a stalk (1) can be inserted substantially transversely to the stripping direction.

12. Method according to one of the claims 9 to 11, wherein the actuating forces for pivoting the swivel arms (6a, 6b) are transmitted to the swivel arms (6a, 6b) exclusively via the ends of the sections (3a, 3b) of the loop means (3) arranged thereon, by means of exerting a tensile force on these sections (3a, 3b) of the loop means (3), in particular from a common starting point (X).

13. Method according to one of the claims 9 to 11, wherein the actuating forces for pivoting the swivel arms (6a, 6b) are not or not exclusively transmitted to the swivel arms (6a, 6b) via the ends of the sections (3a, 3b) of the loop means (3) arranged thereon, and in particular wherein a constant or spring-elastic tensile force is continuously exerted on said sections (3a, 3b) of the loop means (3), in particular from a common starting point (X).

14. Method according to one of the preceding claims, wherein a cord, a rope or a band material made of plastic and/or metal, in particular of stainless steel, is used as a loop means (3).

15. Method according to claim 14, wherein the cord, rope or band material is progressively or in intervals replaced with new corresponding material.

16. Stripping device for use in carrying out the method according to one of the preceding claims, comprising a stripper (7) for forming a loop (2) around a stalk (1) to be stripped for stripping leaves and/or flowers from the stalk (1) when the stalk (1) is pulled through the loop (2) in the longitudinal direction of the stalk, wherein the stripper (7) has flexurally elastic or flexurally slack loop means (3, 3a, 3b) which have tensile strength in the direction of the loop and wherein it is designed in such a way that, in the intended operation, the loop (2) around the stalk (1) is formed by these loop means (3, 3a, 3b) at least in a partial area,
wherein the stripper (7) is designed in such a way that in a loading position it forms an area (B) which is partially delimited by the loop means (3, 3a, 3b) and into which the stalk (1) can be inserted transversely to the intended stripping direction, and that this area (B) can then, when the stalk (1) is inserted, be completely enclosed by the loop means (3, 3a, 3b) and any possible further elements (8) forming the loop (2), **characterized in that** this area (B) can be circumferentially reduced in size until the stalk (1) is enclosed by the loop means (3) and the possible further elements (8) forming the loop (2).

17. Stripping device according to claim 16, wherein the device has means with which, in the intended operation when the stalk (1) is pulled through the loop (2), a certain tensile force in the direction of the loop can be ensured in the loop means (3, 3a, 3b).

18. Stripping device according to one of the claims 16 to 17, wherein the stripper (7) is designed in such a way that, in the intended operation, the loop (2) around the stalk (1) is formed exclusively from loop means (3, 3a, 3b) which are flexurally elastic or flexurally slack and which have tensile strength in the direction of the loop.

19. Stripping device according to claim 18, wherein the stripper is designed in such a way that, in the intended operation, the loop (2) around the stalk (1) is formed by a continuous section of a single loop means (3) .

20. Stripping device according to claim 18, wherein the stripper (7) is designed in such a way that, in the intended operation, the loop (2) is formed by several separate sections (3a, 3b), in particular by exactly two separate sections (3a, 3b) or comprises such sections, which are provided by one or more loop means (3) .

21. Stripping device according to one of the claims 16 to 20, wherein the stripper (7) is designed in such a way that in the loading position it forms an area (B) which is formed between two sections (3a, 3b) of the loop means (3) leading away from each other, in particular from a common starting point (X), and that this area (B) can then be completely enclosed and circumferentially reduced in size by crossing these two sections (3a, 3b) of the loop means (3) until the stalk (1) is looped by the loop means (3) and the possible further elements (8) forming the loop (2).

22. Stripping device according to claim 21, wherein the stripper (7) is designed in such a way that in the loading position it forms an area (B) which is formed between two sections (3a, 3b) of the loop means (3) leading away from each other from a common starting point (X), and that the common starting point (X) is formed by a point at which the two sections (3a, 3b) of the loop means (3) cross each other.

23. Stripping device according to claim 22, wherein the stripper (7) is designed in such a way that the crossing of the areas of the two sections (3a, 3b) facing away from the common starting point (X) takes place in such a way that at this crossing (Y), viewed in the stripping direction, there is a sequence of the two sections (3a, 3b) which is the reverse of the sequence which is present at the crossing (X) forming the common starting point (X).

24. Stripping device according to one of the claims 21 to 23, wherein the stripper (7) comprises two swivel arms (6a, 6b) on each of which one end of one of the two sections (3a, 3b) is arranged, and wherein the stripper (7) is designed in such a way that the crossing of the two sections (3a, 3b) can be effected by a pivoting of the swivel arms (6a, 6b).

25. Stripping device according to claim 24, wherein the distances between the attachment location of the end of the respective section (3a, 3b) to the swivel axis of the respective swivel arm are equal or different for both swivel arms (6a, 6b), and in particular, wherein the smaller of said distances is less than 80% of the larger of said distances.

26. Stripping device according to one of the claims 24 to 25, wherein the stripper (7) is designed in such a way that the pivoting of the swivel arms (6a, 6b) is effected by overcoming spring-elastic restoring forces which, in the absence of actuating forces for pivoting the swivel arms (6a, 6b), effect a returning of the swivel arms (6a, 6b) into a loading position in which the two sections (3a, 3b) of the loop means (3) lead away from each other, thereby forming an area (B) between them into which a stalk (1) can be inserted transversely to the stripping direction.

27. Stripping device according to one of the claims 24 to 26, wherein the stripper (7) is designed in such a way that the actuating forces for pivoting the swivel arms (6a, 6b) are transmitted to the swivel arms exclusively via the ends of the sections (3a, 3b) of the loop means (3) arranged thereon, by means of exerting a tensile force on these sections (3a, 3b) of the loop means (3), in particular from a common starting point (X) .

28. Stripping device according to one of the claims 24 to 26, wherein the stripper (7) is designed in such a way that the actuating forces for pivoting the swivel arms (6a, 6b) are not or not exclusively transmitted to the swivel arms (6a, 6b) via the ends of the sections (3a, 3b) of the loop means (3) arranged thereon, and in particular that, in the intended operation, a constant or spring-elastic tensile force is continuously exerted on these sections (3a, 3b) of the loop means (3), in particular from a common starting point (X).

29. Stripping device according to one of the claims 16 to 28, wherein the stripper (7) comprises a cord, a rope (3) or a band material made of plastic and/or metal, in particular of stainless steel, as loop means.

30. Stripping device according to claim 29, wherein the stripper (7) is configured such that the cord, rope or band material is progressively or in intervals replaced with new corresponding material.

31. Arrangement for carrying out the method according to any one of the claims 1 to 15, comprising a stripping device according to any one of the claims 16 to 30 and a drawing-in device for pulling the stalk (1) in the longitudinal direction of the stalk through the loop (2) formed by the stripping device while stripping the leaves and/or flowers from the stalk (1).

32. Use of the stripping device according to any one of the claims 16 to 30 or the arrangement according to claim 31 for stripping leaves and/or flowers from a stalk (1), in particular for stripping cannabis leaves and/or cannabis flowers from a stalk (1) or hop leaves and/or hop cones from a stalk (1).

## Revendications

1. Procédé pour enlever des feuilles et/ou des fleurs d'une tige (1), en particulier pour enlever des feuilles de cannabis et/ou des fleurs de cannabis d'une tige (1), comprenant les étapes:
a) former une boucle (2) autour de la tige (1), qui est formée au moins dans une zone partielle par des moyens de boucle (3, 3a, 3b) qui sont élastiques en flexion ou souples en flexion et qui présentent une résistance à la traction dans la direction de la boucle ; et
b) tirer la tige (1) dans la direction longitudinale de la tige à travers la boucle (2) tout en enlevant les feuilles et/ou les fleurs de la tige (1),
dans lequel la tige (1) est insérée transversalement à la direction de la boucle dans une zone (B) partiellement délimitée par les moyens de boucle (3, 3a, 3b) et cette zone (B) est ensuite complètement entourée par les moyens de boucle (3, 3a, 3b) et tout autre élément supplémentaire possible (8) formant la boucle,
**caractérisé en ce que** cette zone (B) est réduite circonférentiellement en taille jusqu'à ce que la tige (1) soit complètement ou au moins pour la plus grande partie entourée par les moyens de boucle (3, 3a, 3b) et les autres éléments supplémentaires possibles (8) formant la boucle.

2. Procédé selon l'une des revendications précédentes, dans lequel, pendant le tirage de la tige (1) à travers la boucle (2), une force de traction spécifique dans la direction de la boucle est assurée dans les moyens de boucle (3, 3a, 3b).

3. Procédé selon l'une des revendications précédentes, dans lequel la boucle (2) est formée exclusivement de moyens de boucle (3, 3a, 3b) qui sont élastiques ou souples en flexion et qui présentent une résistance à la traction dans la direction de la boucle.

4. Procédé selon la revendication 3, dans lequel la boucle (2) est formée par une section continue d'un seul moyen de boucle (3).

5. Procédé selon l'une des revendications 1 à 3, dans lequel la boucle (2) est formée par plusieurs sections séparées (3a, 3b), en particulier par exactement deux sections séparées (3a, 3b) ou comprend de telles sections, qui sont fournies par un ou plusieurs moyens de boucle (3).

6. Procédé selon l'une des revendications précédentes, dans lequel la tige (1) est introduite transversalement à la direction d'effeuillage dans une zone (B) qui est formée entre deux sections (3a, 3b) des moyens de boucle (3) s'éloignant l'une de l'autre, en particulier à partir d'un point de départ commun (X), et dans lequel cette zone (B) est ensuite complètement entourée et réduite de manière circonférentielle en croisant ces deux sections (3a, 3b) du moyen de boucle (3) jusqu'à ce que la tige (1) soit entourée par le moyen de boucle (3) et les éventuels autres éléments (8) formant la boucle (2).

7. Procédé selon la revendication 6, dans lequel la tige (1) est insérée transversalement à la direction d'effeuillage dans une zone (B) formée entre deux sections (3a, 3b) du moyen de boucle (3) s'éloignant l'une de l'autre à partir d'un point de départ commun (X), et dans lequel ce point de départ commun (X) est formé par un point auquel les deux sections (3a, 3b) se croisent.

8. Procédé selon la revendication 7, dans lequel le croisement des zones des deux sections (3a, 3b) opposées au point de départ commun (X) a lieu de telle sorte qu'à ce croisement (Y), il y a une séquence des deux sections (3a, 3b), vu dans la direction d'enlèvement, qui est l'inverse de la séquence qui est présente au croisement formant le point de départ commun (X) .

9. Procédé selon l'une des revendications 6 à 8, dans lequel le croisement des deux sections (3a, 3b) est réalisé par un pivotement de deux bras pivotants (6a, 6b), sur chacun desquels est disposée une extrémité de l'un des deux sections (3a, 3b).

10. Procédé selon la revendication 9, dans lequel les distances entre l'emplacement de fixation de l'extrémité de la section respective (3a, 3b) et l'axe de pivotement du bras pivotant respectif sont égales ou différentes pour les deux bras pivotants (6a, 6b), et en particulier, dans lequel la plus petite desdites distances est inférieure à 80% de la plus grande desdites distances.

11. Procédé selon l'une des revendications 9 à 10, dans lequel le pivotement des bras pivotants (6a, 6b) s'effectue en surmontant des forces de rappel élastiques qui, en l'absence de forces d'actionnement pour le pivotement des bras pivotants (6a, 6b), provoquent un retour des bras pivotants dans une position de chargement dans laquelle les deux sections (3a, 3b) du moyen de boucle (3) s'éloignent l'une de l'autre, formant ainsi entre elles une zone (B) dans laquelle une tige (1) peut être insérée sensiblement transversalement à la direction d'effeuillage.

12. Procédé selon l'une des revendications 9 à 11, dans lequel les forces d'actionnement pour le pivotement des bras pivotants (6a, 6b) sont transmises aux bras pivotants (6a, 6b) exclusivement par l'intermédiaire des extrémités des sections (3a, 3b) des moyens de boucle (3) disposées sur ceux-ci, en exerçant une force de traction sur ces sections (3a, 3b) des moyens en boucle (3), en particulier à partir d'un point de départ commun (X).

13. ¬ Procédé selon l'une des revendications 9 à 11, dans lequel les forces d'actionnement pour le pivotement des bras pivotants (6a, 6b) ne sont pas ou pas exclusivement transmises aux bras pivotants (6a, 6b) par les extrémités des sections (3a, 3b) des moyens de boucle (3) disposé sur ceux-ci, et en particulier dans lequel une force de traction constante ou élastique est exercée en continu sur lesdites sections (3a, 3b) des moyens de boucle (3), en particulier à partir d'un point de départ commun (X).

14. Procédé selon l'une des revendications précédentes, dans lequel un cordon, une corde ou un matériau de bande en plastique et/ou en métal, en particulier en acier inoxydable, est utilisé comme moyen de boucle (3).

15. Procédé selon la revendication 14, dans lequel le matériau du cordon, de la corde ou de la bande est remplacé progressivement ou par intervalles par un nouveau matériau correspondant.

16. Dispositif d'effeuillage destiné à être utilisé pour la mise en oeuvre du procédé selon l'une des revendications précédentes, comprenant un effeuilleur (7) pour former une boucle (2) autour d'une tige (1) à effeuiller pour effeuiller les feuilles et/ou les fleurs de la tige (1) lorsque la tige (1) est tirée à travers la boucle (2) dans la direction longitudinale de la tige, dans lequel l'effeuilleur (7) présente des moyens de boucle (3, 3a, 3b) élastiques ou souples en flexion qui présentent une résistance à la traction dans la direction de la boucle, et dans lequel il est conçu de telle sorte que, dans le fonctionnement prévu, la boucle (2) autour de la tige (1) est formée par ces moyens de boucle (3, 3a, 3b) au moins dans une zone partielle,
dans lequel l'effeuilleur (7) est conçu de telle sorte que, dans une position de chargement, elle forme une zone (B) qui est partiellement délimitée par les moyens de boucle (3, 3a, 3b) et dans lequel la tige (1) peut être insérée transversalement à la direction d'effeuillage prévue, et que cette zone (B) peut ensuite, lorsque la tige (1) est insérée, être complètement entourée par les moyens de boucle (3, 3a, 3b) et d'éventuels autres éléments (8) formant la boucle (2), **caractérisé en ce que** cette zone (B) peut être réduite circonférentiellement jusqu'à ce que la tige (1) soit entourée par les moyens de boucle (3) et les éventuels autres éléments (8) formant la boucle (2).

17. Dispositif d'effeuillage selon la revendication 16, dans lequel le dispositif comporte des moyens avec lesquels, dans le fonctionnement prévu lorsque la tige (1) est tirée à travers la boucle (2), une certaine force de traction dans la direction de la boucle peut être assurée dans les moyens de boucle (3, 3a, 3b).

18. Dispositif d'effeuillage selon l'une des revendications 16 à 17, dans lequel l'effeuilleur (7) est conçu de telle sorte que, dans le fonctionnement prévu, la boucle (2) autour de la tige (1) est formée exclusivement de moyens de boucle (3, 3a, 3b) qui sont élastiques en flexion ou souples en flexion et qui présentent une résistance à la traction dans la direction d'effeuillage.

19. Dispositif d'effeuillage selon la revendication 18, dans lequel le dispositif de d'effeuillage est conçu de telle sorte que, dans l'opération prévue, la boucle (2) autour de la tige (1) est formée par une section continue d'un moyen de boucle unique (3).

20. Dispositif d'effeuillage selon la revendication 18, dans lequel l'effeuilleur (7) est conçu de telle sorte que, dans le fonctionnement prévu, la boucle (2) est formée par plusieurs sections séparées (3a, 3b), en particulier par exactement deux sections séparées (3a, 3b) ou comprend de telles sections, qui sont fournies par un ou plusieurs moyens de boucle (3).

21. Dispositif d'effeuillage selon l'une des revendications 16 à 20, dans lequel l'effeuilleur (7) est conçu de telle sorte qu'en position de chargement, il forme une zone (B) qui est formée entre deux sections (3a, 3b) du moyen de boucle (3) s'éloignant l'une de l'autre, en particulier à partir d'un point de départ commun (X), et que cette zone (B) peut ensuite être complètement fermée et réduite dans sa circonférence en croisant ces deux sections (3a, 3b) des moyens de boucle (3) jusqu'à ce que la tige (1) soit bouclée par les moyens de boucle (3) et les éventuels autres éléments (8) formant la boucle (2).

22. Dispositif d'effeuillage selon la revendication 21, dans lequel l'effeuilleur (7) est conçu de telle sorte que, dans la position de chargement, il forme une zone (B) qui est formée entre deux sections (3a, 3b) du moyen de boucle (3) s'éloignant l'une de l'autre à partir d'un point de départ commun (X), et que le point de départ commun (X) est formé par un point auquel les deux sections (3a, 3b) du moyen de boucle (3) se croisent.

23. Dispositif d'effeuillage selon la revendication 22, dans lequel l'effeuilleur (7) est conçu de telle sorte que le croisement des zones des deux sections (3a, 3b) opposées au point de départ commun (X) a lieu de telle sorte qu'à ce croisement (Y), vu dans la direction d'effeuillage, il y a une séquence des deux sections (3a, 3b) qui est l'inverse de la séquence qui est présente au croisement (X) formant le point de départ commun (X).

24. Dispositif d'effeuillage selon l'une des revendications 21 à 23, dans lequel l'effeuilleur (7) comprend deux bras pivotants (6a, 6b) sur chacun desquels est disposée une extrémité de l'une des deux sections (3a, 3b), et dans lequel l'effeuilleur (7) est conçu de telle sorte que le croisement des deux sections (3a, 3b) peut être effectué par un pivotement des bras pivotants (6a, 6b).

25. Dispositif d'effeuillage selon la revendication 24, dans lequel les distances entre l'emplacement de fixation de l'extrémité de la section respective (3a, 3b) et l'axe de pivotement du bras pivotant respectif sont égales ou différentes pour les deux bras pivotants (6a, 6b), et en particulier, dans lequel la plus petite desdites distances est inférieure à 80% de la plus grande desdites distances.

26. Dispositif d'effeuillage selon l'une des revendications 24 à 25, dans lequel l'effeuilleur (7) est conçu de telle sorte que le pivotement des bras pivotants (6a, 6b) s'effectue en surmontant des forces de rappel élastiques qui, en l'absence de forces d'actionnement pour le pivotement des bras pivotants (6a, 6b), provoquent un retour des bras pivotants (6a, 6b) dans une position de chargement dans laquelle les deux sections (3a, 3b) du moyen de boucle (3) s'éloignent l'une de l'autre, formant ainsi une zone (B) entre elles dans laquelle une tige (1) peut être insérée transversalement à la direction d'effeuillage.

27. Dispositif d'effeuillage selon l'une des revendications 24 à 26, dans lequel l'effeuilleur (7) est conçu de telle sorte que les forces d'actionnement pour faire pivoter les bras pivotants (6a, 6b) sont transmises aux bras pivotants exclusivement par les extrémités des sections (3a, 3b) du moyen de boucle (3) disposé sur celui-ci, en exerçant une force de traction sur ces sections (3a, 3b) du moyen de boucle (3), en particulier à partir d'un point de départ commun (X).

28. Dispositif d'effeuillage selon l'une des revendications 24 à 26, dans lequel l'effeuilleur (7) est conçu de telle sorte que les forces d'actionnement pour le pivotement des bras pivotants (6a, 6b) ne sont pas ou pas exclusivement transmises aux bras pivotants (6a, 6b) par les extrémités des sections (3a, 3b) du moyen de boucle (3) arrangé sur celui-ci, et en particulier que, dans le fonctionnement prévu, une force de traction constante ou élastique est exercée en continu sur ces sections (3a, 3b) du moyen de boucle (3), en particulier à partir d'un point de départ commun (X).

29. Dispositif d'effeuillage selon l'une des revendications 16 à 28, dans lequel l'effeuilleur (7) comprend un cordon, une corde (3) ou un matériau en bande en matière plastique et/ou en métal, notamment en acier inoxydable, comme moyen de bouclage.

30. Dispositif d'effeuillage selon la revendication 29, dans lequel l'effeuilleur (7) est configuré de telle sorte que le matériau de la corde, du cordon ou de la bande est remplacé progressivement ou par intervalles par un nouveau matériau correspondant.

31. Agencement pour la mise en oeuvre du procédé selon l'une des revendications 1 à 15, comprenant un dispositif d'effeuillage selon l'une des revendications 16 à 30 et un dispositif de tirage pour tirer la tige (1) dans la direction longitudinale de la tige à travers la boucle (2) formée par le dispositif d'effeuillage tout en effeuillant les feuilles et/ou les fleurs de la tige (1).

32. Utilisation du dispositif d'effeuillage selon l'une des revendications 16 à 30 ou de l'agencement selon la revendication 31 pour l'effeuillage de feuilles et/ou de fleurs d'une tige (1), en particulier pour l'effeuillage de feuilles de cannabis et/ou de fleurs de cannabis d'une tige (1) ou de feuilles de houblon et/ou de cônes de houblon d'une tige (1).
